# EUROPÄISCHE PATENTSCHRIFT

(11) **EP 3 592 998 B1**
(45) Veröffentlichungstag und Bekanntmachung des Hinweises auf die Patenterteilung: **24.03.2021**
(21) Anmeldenummer: 18705584.3
(22) Anmeldetag: 09.02.2018
(51) Int. Cl.: F16C 11/06

(54) **KUGELGELENKSCHUTZKAPPE ZUM SCHUTZ EINES FERTIG MONTIERTEN KUGELGELENKS**
PROTECTIVE CAP FOR A BALL JOINT FOR PROTECTING A COMPLETELY ASSEMBLED BALL JOINT
CAPUCHON DE PROTECTION DE JOINT À ROTULE POUR LA PROTECTION D'UN JOINT À ROTULE INSTALLÉ

(30) Priorität: 07.03.2017 DE 102017203687
(43) Veröffentlichungstag der Anmeldung: 15.01.2020
(73) Patentinhaber: ZF Friedrichshafen AG, 88046 Friedrichshafen (DE)
(72) Erfinder: ALTMEPPEN, Janina, 49716 Meppen (DE); REDDEHASE, Günter, 49448 Brockum (DE)
(74) Vertreter: ZF Friedrichshafen AG
(86) Internationale Anmeldenummer: PCT/EP2018/053245
(87) Internationale Veröffentlichungsnummer: WO 2018/162170

(56) Entgegenhaltungen:
- DE-A1- 10 242 578
- DE-A1-102004 037 005
- DE-A1-102008 001 177
- US-A- 3 598 434
- US-A- 4 848 950
- US-A- 5 484 218

## Beschreibung

Die Erfindung betrifft eine Kugelgelenkschutzkappe zum Schutz eines fertig montierten Kugelgelenks gemäß dem Oberbegriff von Anspruch 1 und ein fertig montiertes Kugelgelenk mit einer solchen Kugelgelenkschutzkappe gemäß dem Oberbegriff von Anspruch 13 sowie Verwendungsmöglichkeiten einer solchen Kugelgelenkschutzkappe und/oder eines solchen Kugelgelenks gemäß den Ansprüchen 17 bis 19. Kugelgelenkschutzkappen zur Abdeckung eines Zapfenteils und eines Dichtungsbalgs eines fertig montierten Kugelgelenks sind aus dem Stand der Technik bekannt, wobei derartige Kugelgelenke häufig bei Fahrwerkteilen oder Lenkungsteilen von Kraftfahrzeugen eingesetzt werden. Aus der DE 102 42 578 A1 ist eine Kugelgelenkschutzkappe zum Abdecken eines Dichtungsbalgs und eines sich aus dem Dichtungsbalg heraus erstreckenden, zapfenförmigen Teilbereichs eines fertig montierten Kugelgelenks bekannt. Die Kugelgelenkschutzkappe weist in Axialrichtung drei nacheinander angeordnete hohlzylinderförmige Abschnitte auf; ist also in Axialrichtung durchgehend offen ausgebildet. Der Dichtungsbalg wird von einem der drei hohlzylindrischen Abschnitte abgedeckt. Die Kugelgelenkschutzkappe ist auf den zapfenförmigen Teilbereich des fertig montierten Kugelgelenks aufsteckbar und wieder von diesem abziehbar, wobei der zapfenförmige Teilbereich Bestandteil eines Gelenkzapfens ist, der auch als Kugelzapfen bezeichnet wird. An einer Innenkontur eines der drei hohlzylinderförmigen Abschnitte, der als hohlzylinderförmiger Endabschnitt bezeichnet wird, sind mehrere radial nach innen vorstehende elastische Zungen angeordnet, die in Umfangsrichtung auf gleicher axialer Höhe liegen und durch Schlitze voneinander getrennt sind. Die elastischen Zungen greifen in einen oder mehrere Gewindegänge eines Gewindeabschnitts des zapfenförmigen Teilbereichs ein und fixieren auf diese Weise die Kugelgelenkschutzkappe auf dem zapfenförmigen Teilbereich. Die elastischen Zungen greifen allerdings nicht reproduzierbar gleich in die Gewindegänge ein, sondern in Abhängigkeit von der Lage, die die Zungen und der zugeordnete Gewindeabschnitt zufällig relativ zueinander einnehmen. Dies liegt darin begründet, dass die Zungen in Umfangsrichtung der Kugelgelenkschutzkappe auf gleicher axialer Höhe angeordnet und somit nicht an die wendelförmig verlaufenden Gewindegänge des Gewindeabschnitts angepasst sind.

Demnach kann eine erste Zunge zufällig an einem Gewindegrund eines Gewindegangs anliegen und eine zweite Zunge umfänglich versetzt an einer Gewindespitze des Gewindegangs, der auch als Gewinderille bezeichnet wird. Infolge der daraus resultierenden, nicht wiederholgenau erreichbaren Lage der Zungen zu den Gewindegängen des Gewindeabschnitts variiert auch eine für ein Lösen der Kugelgelenkschutzkappe erforderliche Kraft, die vor dem Abziehen derselben von dem zapfenförmigen Teilbereich aufgebracht werden muss. Ist beispielsweise eine elastische Zunge zufällig in Abziehrichtung ausgerichtet und stützt sich zugleich gegen eine Gewindeflanke eines Gewindegangs ab, ist der für das Lösen der derart verkrallten Zunge erforderliche Kraftaufwand relativ groß. Auch kann eine ungünstig verkrallte Zunge beim Lösen vor dem Abziehen beschädigt werden oder gar abbrechen, wodurch bei einer Wiederverwendung der Kugelgelenkschutzkappe ein einwandfreier Sitz derselben auf dem Gewindeabschnitt nicht mehr gewährleistet ist. Erschwerend kommt hinzu, dass beschädigte Zungen nicht in jedem Fall ohne weiteres erkannt werden können, weil die Zungen innenliegend in der Kugelgelenkschutzkappe angeordnet sind. Die Kugelgelenkschutzkappe weist einen als Absatz ausgebildeten Übergangsbereich mit einem Durchmesserversatz auf. Der Übergangsbereich der Kugelgelenkschutzkappe soll an einem als Rezess bezeichneten Absatz eines kegelförmigen Aufnahmeabschnitts des zapfenförmigen Teilbereichs des Kugelgelenks dichtend anliegen. Dies ist jedoch aufgrund der nicht wiederholgenau erreichbaren Lage der Zungen zu den Gewindegängen des Gewindeabschnitts nicht in jeder Lage gewährleistet, die die Zungen relativ zu den Gewindegängen einnehmen können.

Die Kugelgelenkschutzkappe ist auf der dem Dichtungsbalg abgewandten Stirnseite offen ausgebildet, weshalb der Gewindeabschnitt beispielsweise nicht gegenüber korrosiv wirkenden flüssigen oder gasförmigen Medien abgedichtet ist. Zugleich ist der in der Regel aus einem Stahlwerkstoff bestehende Gelenkzapfen anfällig für Korrosion, weil er in der Regel zumindest größtenteils eine metallisch blanke Oberfläche aufweist, die von einer spanenden Bearbeitung herrührt. Bei der spanenden Bearbeitung handelt es sich in der Regel um eine Drehbearbeitung unter Verwendung eines Kühlschmierstoffs, der einen dünnen, zumindest korrosionshemmend wirkenden, Schmierfilm auf dem Gelenkzapfen hinterlässt. Wenn das Kugelgelenk nach erfolgter Montage zur Vorbereitung auf eine Spritzlackierung eine Vorbehandlungsanlage durchläuft, kann der auf dem Gelenkzapfen vorhandene Schmierfilm allerdings wieder abgetragen werden. Dies ist insbesondere der Fall, wenn die nicht abgedichtete Oberfläche des Gelenkzapfens teilweise unter erhöhtem Druck mit wässrigen, teilweise korrosiv wirkenden, Reinigungs- und Entfettungsmedien beaufschlagt wird. Daraus resultierend kann es auf dem Gelenkzapfen, insbesondere dem Gewindeabschnitt des Gelenkzapfens, zu Oberflächenkorrosion kommen. Dies ist insbesondere der Fall, wenn das Kugelgelenk mit dem Gelenkzapfen nach der Vorbehandlung mit den vorgenannten wässrigen Medien in einer nachgeschalteten Trocknungsanlage erwärmt wird.

Aufgrund der Gefahr des Auftretens von Oberflächenkorrosion auf dem Gewindeabschnitt sind folgende, nicht wertschöpfende Zusatzarbeitsgänge erforderlich: Abziehen der Kugelgelenkschutzkappe, Sichtkontrolle des Gewindeabschnitts, gegebenenfalls entfernen vorhandener Oberflächenkorrosion durch Bürsten, erneutes Aufbringen eines Fettfilms auf den Gewindeabschnitt als Korrosionsschutz und erneutes Aufstecken der Kugelgelenkschutzkappe. Ein Fett- oder Schmierfilm auf dem Gelenkzapfen bietet zwar einen Schutz vor Korrosion; begünstigt allerdings auch eine Ablagerung von Schmutz- oder Staubpartikeln, weil diese an dem Fett- oder Schmierfilm haften bleiben und weil die Kugelgelenkschutzkappe zugleich auf der dem Dichtungsbalg gegenüberliegenden Stirnseite offen ausgebildet ist. Die stirnseitig offene Kugelgelenkschutzkappe hat ferner den Nachteil, dass sich an dem Gewindeabschnitt Kondensat bilden kann, wodurch die Korrosionsbildung begünstigt wird. Dies kann beispielweise der Fall sein, wenn im Winter angelieferte kalte Kugelgelenke mit kalten Gelenkzapfen in einer warmen Halle gelagert werden. Die Kugelgelenkschutzkappe kann andererseits nicht ohne weiteres mit einem Boden versehen werden, zumindest nicht, wenn sie im Spritzgussverfahren hergestellt werden soll und der Boden dabei einstückig mit der Kugelgelenkschutzkappe ausgebildet sein soll. Dies liegt darin begründet, dass die Kugelgelenkschutzkappe aufgrund der relativ weit nach radial innen vorstehenden elastischen Zungen dann nicht entformbar wäre.

DE 10 2008 001177 A1 zeigt eine Kugelgelenkschutzkappe mit geschlossenem Boden gemäß dem Oberbegriff des Anspruchs 1. US 5 484 218 A zeigt eine Kugelgelenkschutzkappe mit elastischer unrunder Rastkontur, jedoch keinen geschlossenen Boden. Aufgabe der Erfindung ist es, eine Kugelgelenkschutzkappe für ein fertig montiertes Kugelgelenk bereitzustellen, durch welche der sich aus dem Dichtungsbalg heraus erstreckende Teil des Kugelzapfens wirksam vor Verschmutzung und Korrosion geschützt ist. Insbesondere soll eine alternative Ausführungsform bereitgestellt werden. Diese Aufgabe wird gemäß der vorliegenden Erfindung gelöst durch eine gattungsgemäße Kugelgelenkschutzkappe, welche zusätzlich die kennzeichnenden Merkmale des Patentanspruchs 1 aufweist.

Bevorzugte Ausführungsformen und Weiterbildungen sind Gegenstand der Unteransprüche und der Beschreibung.

Die Erfindung sieht demnach eine Kugelgelenkschutzkappe zum Schutz eines fertig montierten Kugelgelenks vor. Die Kugelgelenkschutzkappe weist einen Balgabschnitt zur Abdeckung eines Dichtungsbalgs des fertig montierten Kugelgelenks und einen sich an den Balgabschnitt anschließenden und zu dem Balgabschnitt hin offenen Zapfenabschnitt zur Abdeckung eines Zapfenteils des fertig montierten Kugelgelenks auf, wobei der Zapfenabschnitt auf den Zapfenteil aufsteckbar ist. Erfindungsgemäß ist der Zapfenabschnitt zur vollständigen Abdichtung des Zapfenteils becherförmig ausgebildet.

Durch die becherförmige Ausbildung des Zapfenabschnitts können keine Schmutzpartikel und keine korrosiv wirkenden Medien an den Zapfenteil gelangen und dort zu Verschmutzungen und/oder Korrosion führen. Darüber hinaus kann ein auf dem Zapfenteil vorhandener, korrosionsschützend wirkender Fettfilm während einer Vorbehandlung mit wässrigen Reinigungsmedien nicht abgespült werden. Dies hat zur Folge, dass die vorgenannten, bei Verwendung einer nicht geschlossenen Kugelgelenkschutzkappe erforderlichen, Zusatzarbeitsgänge entfallen können. Bei der Kugelgelenkschutzkappe handelt es sich ausdrücklich nicht um ein Wärmeschutzschild, das an einem Kugelgelenk verbleibt, wenn dieses in Radnähe eines Fahrzeugs verbaut wird, um einen Dichtungsbalg vor Strahlungswärme zu schützen, die von Bremsscheiben oder Bremstrommeln ausgeht. Insbesondere handelt es sich bei dem Dichtungsbalg um einen Kugelgelenk-Dichtungsbalg und ausdrücklich nicht um einen Dichtungsbalg für eine Gelenkwelle, eine Antriebswelle, ein Wälzlager, ein Gleichlaufgelenk oder dergleichen. Insbesondere ist der Balgabschnitt einstückig mit dem Zapfenabschnitt ausgebildet.

Unter einem fertig montierten Kugelgelenk ist im Zusammenhang mit der vorliegenden Erfindung ein Gelenk mit einem Gehäuse und einem darin dreh- und schwenkbeweglich gleitgelagerten Kugelzapfen zu verstehen. Bevorzugt ist das Kugelgelenk für einen Verbau in einem Kraftfahrzeug geeignet, insbesondere für einen Verbau in einem Fahrwerk und/oder einem Lenksystem eines Kraftfahrzeugs. Vorzugsweise handelt es sich bei dem Kraftfahrzeug um ein Nutzfahrzeug wie beispielsweise einen Lastkraftwagen, einen Omnibus oder ein landwirtschaftliches Nutzfahrzeug. Der insbesondere metallische Kugelzapfen ist aus einer in dem Gehäuse gelagerten Gelenkkugel und einem starr mit dieser verbundenen Zapfenteil gebildet, wobei der Zapfenteil abschnittsweise konisch ausgebildet sein kann und sich aus einer zapfenseitigen Gehäuseöffnung aus dem Gehäuse heraus erstreckt. Die zapfenseitige Gehäuseöffnung ist durch den Dichtungsbalg abgedichtet, wobei der Dichtungsbalg mit einem ersten axialen Ende im Bereich der Gehäuseöffnung dichtend an dem Gehäuse anliegt und mit einem zweiten axialen Ende dichtend an dem Zapfenteil anliegt, wobei die letztgenannte Anlage nur bei aufgesteckter Kugelgelenkschutzkappe oder nach einem Verbau des fertig montierten Kugelgelenks in einem Fahrzeug gegeben ist.

Unter einer becherförmigen Ausbildung des Zapfenabschnitts ist im Zusammenhang mit der vorliegenden Erfindung zu verstehen, dass der Zapfenabschnitt einen Boden aufweist und eine sich von dem Boden in einer Axialrichtung der Kugelgelenkschutzkappe weg erstreckenden Wandung, wobei der Boden und die Wandung bevorzugt einstückig ausgebildet sind. Der Boden kann sich in einer Radialrichtung, die sich senkrecht zu der Axialrichtung erstreckt, auch über die Wandung des Zapfenabschnitts hinaus erstrecken. Insbesondere kann der Boden einstückig in einen umlaufenden, zumindest im Wesentlichen kreisringförmigen Kragen übergehen, der sich radial, also in Radialrichtung, über die Wandung des Zapfenabschnitts hinaus erstreckt. In Axialrichtung gegenüberliegend zu dem Boden weist der Zapfenabschnitt zu dem Balgabschnitt hin eine Öffnung auf, weshalb der Zapfenabschnitt zu dem Balgabschnitt hin offen ausgebildet ist. Die Wandung des becherförmigen Zapfenabschnitts muss nicht zwangsläufig hohlzylindrisch oder in Form eines hohlen Kegelstumpfes ausgebildet sein, sondern kann in Bereichen des Umfangs oder auch über den gesamten Umfang von einem Kreisring-Querschnitt abweichen. Der becherförmige Zapfenabschnitt ist bis auf dessen Öffnung zu dem Balgabschnitt hin geschlossen und zugleich dicht ausgebildet und stellt somit eine Sperre gegenüber flüssigen Medien, wie beispielsweise korrosiv wirkenden Reinigungsmedien, sowie gegenüber Staub und Schmutz dar. Die flüssigen Medien können dabei kurzzeitig auch in Form eines Flüssigkeitsstrahls auf den Zapfenabschnitt der Kugelgelenkschutzkappe einwirken. Darüber hinaus ist der Zapfenabschnitt der Kugelgelenkschutzkappe auch dicht gegenüber gasförmigen Medien, insbesondere Umgebungsluft, Seeluft und Lacknebel.

Durch den becherförmigen Zapfenabschnitt können während eines Lackierens des Kugelgelenks unerwünschte Lackablagerungen auf dem Zapfenteil verhindert werden. Eine Abdichtung gegenüber gasförmigen Medien ist insbesondere während des Transports des Kugelgelenks vorteilhaft, um an dem Zapfenteil Korrosionsschäden, hervorgerufen beispielsweise durch salzhaltige Seeluft, zu vermeiden. Zugleich bewirkt die geschlossene und zugleich dichte Ausbildung der Kugelgelenkschutzkappe eine thermische Isolation, wodurch eine Kondensatbildung auf der Metalloberfläche des Zapfenteils vermieden wird. Insbesondere ist die Kugelgelenkschutzkappe nicht nur aufsteckbar, sondern auch wieder von dem Zapfenteil abziehbar. Durch den vorgenannten Kragen wird vermieden, dass der Werker beim Abziehen der Kugelgelenkschutzkappe, insbesondere beim Abziehen mit Handschuhen, von dem Zapfenabschnitt abrutscht. Bevorzugt besteht die Kugelgelenkschutzkappe aus einem elastisch federnden Material, insbesondere aus Kunststoff wie beispielsweise Polypropylen, und ist im Spritzgussverfahren hergestellt.

Die Kugelgelenkschutzkappe weist eine in Umfangsrichtung ihres Zapfenabschnitts verlaufende Rastkontur auf, die mit einem Gewindeabschnitt des Zapfenteils in Eingriff bringbar ist. Durch die Rastkontur wird vermieden, dass die Kugelgelenkschutzkappe nach dem Aufstecken auf den Zapfenteil selbsttätig wieder von diesem herunterrutschen kann. Ein Außengewinde des Gewindeabschnitts bietet dabei einen guten Halt für die Rastkontur, wobei das Außengewinde vorzugsweise als ein Feingewinde ausgebildet ist, insbesondere als ein metrisches Feingewinde. Unter einer Rastkontur ist in diesem Zusammenhang eine Kontur zu verstehen, die zur Ausbildung einer formschlüssigen Rastverbindung in formschlüssigen Eingriff mit dem zumindest im Wesentlichen formkorrespondierenden Außengewinde des Gewindeabschnitts bringbar ist. Mit einer Rastkontur ist vorliegend ausdrücklich kein Gewinde gemeint, weil eine Kugelgelenkschutzkappe mit einem Innengewinde nicht auf das Außengewinde des Gewindeabschnitts aufsteckbar wäre, sondern nur aufschraubbar, was aber nicht Gegenstand der vorliegenden Erfindung sein soll.

Vorzugsweise ist die Rastkontur in sich formstabil und einstückig mit einer Innenumfangsfläche einer Wandung des Zapfenabschnitts ausgebildet. Bei der Wandung handelt es sich um die bereits zuvor beschriebene Wandung, die sich von dem Boden des Zapfenabschnitts weg in Axialrichtung erstreckt. Unter einer formstabilen Ausbildung ist in diesem Zusammenhang zu verstehen, dass die Rastkontur derart steif ausgeführt ist, dass unter den betriebsbedingt zu erwartenden Krafteinwirkungen, im Gegensatz zu den aus dem Stand der Technik bekannten elastischen Zungen, keine nennenswerte Verformung erkennbar ist. Durch die formstabile Ausbildung der Rastkontur werden Beschädigungen derselben vermieden, insbesondere beim Abziehen der Kugelgelenkschutzkappe und beim Lösen vor dem Abziehen. Insbesondere stützt sich die Rastkontur unnachgiebig an der Wandung ab.

Zweckmäßig ist die Rastkontur als ein Rippenpaar ausgebildet, dessen zwei Rippen sich jeweils um weniger als 180 Grad in Umfangsrichtung des Zapfenabschnitts erstrecken und/oder von einer Innenumfangsfläche des Zapfenabschnitts weg in Richtung der Mittelachse des Zapfenabschnitts um weniger als 1 Millimeter aufbauen. Unter einer Rippe ist im Zusammenhang mit der vorliegenden Erfindung ein längliches, schmales Element zu verstehen, das in Axialrichtung eine deutlich kleinere Ausdehnung aufweist als in Umfangsrichtung. Die Mittelachse des Zapfenabschnitts entspricht vorliegend der Mittelachse der Kugelgelenkschutzkappe. Durch die vorgenannte Ausbildung der Rippen wird eine sogenannte Zwangsentformung in Axialrichtung der Kugelgelenkschutzkappe möglich. Dabei wird das elastisch federnde Material der Kugelgelenkschutzkappe im elastischen Bereich verformt, um nach einem Ausstoßen aus dem Spritzgusswerkzeug wieder unversehrt in seinen Ursprungszustand zurückzukehren. Durch diese Maßnahme können die Werkzeugkosten gering gehalten und trotzdem der Boden des Zapfenabschnitts realisiert werden. Die Rippen des Rippenpaares weisen in Umfangsrichtung bevorzugt keine Steigung auf, d. h. sie erstrecken sich parallel zu einer Ebene, die senkrecht zu der Axialrichtung ausgerichtet ist. Insbesondere sind die Rippen symmetrisch in Bezug auf eine Symmetrieebene ausgebildet, die sich senkrecht zu der Mittelachse des Zapfenabschnitts erstreckt. Aufgrund der Ausgestaltung der Rippen ist die für das Aufstecken der Kugelgelenkschutzkappe auf den Zapfenteil erforderliche Kraft gleich groß wie die für das Abziehen erforderliche Kraft, was bei den eingangs beschriebenen elastischen Zungen nicht in jedem Fall gegeben ist.

Vorteilhaft sind die zwei Rippen des Rippenpaares radial gegenüberliegend und/oder in Axialrichtung der Kugelgelenkschutzkappe versetzt angeordnet. Insbesondere sind die beiden Rippen um die halbe Gewindesteigung, die der durch den Zapfenabschnitt zu schützende Gewindeabschnitt aufweist, versetzt angeordnet. Auf diese Weise können die Rippen quasi wie ein Gewinde formschlüssig in die Gewindegänge, nachfolgend auch Gewinderillen genannt, des Gewindeabschnitts eingreifen. Somit vereint die Anordnung der Rippen die Vorteile eines Gewindes, das einen guten Formschluss mit den Gewinderillen bietet, mit dem Vorteil einer Montage der Kugelgelenkschutzkappe durch zeitsparendes Aufstecken und Abziehen, wodurch die Montage- bzw. Demontagezeit gegenüber einem Verschrauben erheblich verkürzt werden kann. Mit einer radial gegenüberliegenden Anordnung ist in diesem Zusammenhang gemeint, dass die beiden Rippen in Umfangsrichtung des Zapfenabschnitts gegenüberliegend angeordnet sind.

Bevorzugt weisen die zwei Rippen in deren Mitten in Umfangsrichtung des Zapfenabschnitts jeweils eine maximale radiale und axiale Erstreckung auf und gehen zu beiden umfänglichen Enden hin jeweils radial und axial stetig auslaufend in die Wandung des Zapfenabschnitts über. Durch diese Ausgestaltung der Rippen wird erreicht, dass die Rippen zumindest im Wesentlichen in den Gewinderillen des Gewindeabschnitts aufnehmbar sind. Während des Aufsteckens der Kugelgelenkschutzkappe in Axialrichtung spürt man in Wegabständen, die jeweils der Gewindesteigung des Gewindeabschnitts entsprechen, ein deutliches Einrasten der Rippen in die Gewinderillen des Gewindeabschnitts. Dies rührt daher, dass jede Rippe eindeutig einem Umfangsabschnitt einer Gewinderille des Gewindeabschnitts zugeordnet ist. Nicht eindeutige Zwischenlagen und Schieflagen der aufgeschobenen Kugelgelenkschutzkappe, wie sie beispielsweise bei den eingangs erwähnten elastischen Zungen vorkommen, werden vermieden.

Zweckmäßig verjüngen sich die Rippen im Querschnitt zu der Mittelachse hin, um eine Zwangsentformung der Kugelgelenkschutzkappe nach einem Spritzgießen zu erleichtern und/oder während des Aufsteckens der Kugelgelenkschutzkappe auf den Zapfenteil das Einrasten der Rippen in die Gewinderillen des Gewindeabschnitts zu verbessern. Durch die sich zu der Mittelachse hin verjüngenden Rippen wird somit eine Doppelfunktion bewirkt. Insbesondere verjüngen sich die Rippenquerschnitte zu der Mittelachse hin stetig und zugleich auf den jeweils nächstliegenden Punkt der Mittelachse zulaufend. Dementsprechend können die Rippenquerschnitte beispielsweise als Dreiecke mit der Mittelachse zugewandter Spitze ausgebildet sein. Durch eine derartige Ausbildung der Rippenquerschnitte wird darüber hinaus eine gute axiale Zentrierung der Rippen in den Gewinderillen des Gewindeabschnitts erreicht. Bevorzugt weisen die Rippen einen halbkreisförmigen Querschnitt auf, wobei die Sehne dieses Halbkreises in der Innenumfangsfläche des Zapfenabschnitts liegt.

Gemäß einer Weiterbildung der Erfindung weist der Zapfenabschnitt mehrere in dessen Umfangsrichtung versatzfrei angeordnete und zugleich in Axialrichtung der Kugelgelenkschutzkappe parallel zueinander beabstandete Rippenpaare auf, insbesondere entspricht der parallele Abstand jeweils einem Vielfachen der Gewindesteigung des durch den Zapfenabschnitt aufnehmbaren Gewindeabschnitts. Auf diese Weise kann zum einen der Festsitz der Kugelgelenkschutzkappe auf dem Zapfenteil und zum anderen die für das Abziehen der Kugelgelenkschutzkappe von dem Zapfenteil erforderliche Kraft variiert werden. Die Formulierung, dass die Rippenpaare in Umfangsrichtung des Zapfenabschnitts versatzfrei angeordnet sind, ist hier so zu verstehen, dass die jeweils ersten und zweiten Rippen der Rippenpaare in Axialrichtung bündig angeordnet sind, wenn jede der ersten und zweiten Rippen in Umfangsrichtung des Zapfenabschnitts die gleiche Länge aufweist. Alternativ können die einzelnen Rippen der mehreren Rippenpaare aber auch unterschiedliche Längen aufweisen. Der vorgenannte parallele Abstand kann beispielsweise dem Doppelten der Gewindesteigung des Gewindeabschnitts entsprechen, um auf diese Weise die zuvor beschriebene Zwangsentformung in Axialrichtung der Kugelgelenkschutzkappe zu begünstigen.

Der Zapfenabschnitt ist zumindest im Bereich der Rastkontur im Querschnitt unrund, insbesondere elliptisch, ausgebildet, insbesondere bestimmen die Rippen des radial gegenüberliegenden Rippenpaares einen minimalen radialen Abstand in Radialrichtung des Zapfenabschnitts. Insbesondere liegt der minimale radiale Abstand der gegenüberliegenden Rippen, bezogen auf deren Erstreckung in Umfangsrichtung des Zapfenabschnitts, in der jeweiligen Rippenmitte vor oder, anders ausgedrückt, in der Mitte des Umfangsabschnitts, den die jeweilige Rippe einnimmt. Wenn der Zapfenabschnitt im Bereich des Rippenpaares im Querschnitt elliptisch ausgebildet ist, liegt der minimale radiale Abstand auf den kleinen Halbachsen der Querschnittsellipse. Der minimale radiale Abstand ist mindestens so groß wie der Außendurchmesser des Gewindeabschnitts des fertig montierten Kugelgelenks für das die Kugelgelenkschutzkappe vorgesehen ist. Bevorzugt ist der minimale radiale Abstand aber kleiner als der vorgenannte Außendurchmesser, damit die Wandung des Zapfenabschnitts bei aufgesteckter Kugelgelenkschutzkappe durch den Gewindeabschnitt des Kugelgelenks auseinandergedrückt wird und somit die Rippen unter Vorspannung in die Gewinderillen des Gewindeabschnitts gedrückt werden. Die Vorspannung wird dabei durch die elastisch federnden Eigenschaften des Materials der Kugelgelenkschutzkappe bewirkt. In diesem Zusammenhang wirkt die formschlüssige Rastverbindung zwischen den Gewinderillen des Gewindeabschnitts und den zugeordneten Rippen zugleich auch als eine kraftschlüssige Verbindung.
Bevorzugt weist der Zapfenabschnitt an dessen Außenumfangsfläche zwei radial voneinander abgewandte Griffbereiche auf, bevorzugt weisen die Griffbereiche zur Reibungserhöhung, insbesondere beim Aufstecken und/oder Abziehen der Kugelgelenkschutzkappe auf den bzw. von dem Zapfenteil des Kugelgelenks, eine Strukturierung auf, vorzugsweise ist die Strukturierung als eine Rändelung, Noppenstruktur, Aufrauhung oder in Umfangsrichtung des Zapfenabschnitts verlaufende Riffelung ausgebildet. Durch die Griffbereiche wird eine Unterstützung beim Aufstecken und/oder Abziehen der Kugelgelenkschutzkappe bereitgestellt, insbesondere wenn der Werker dabei einen Handschuh trägt. Radial voneinander abgewandte Griffbereiche sind im Zusammenhang mit der vorliegenden Erfindung zugleich in Radialrichtung gegenüberliegend an der Außenumfangsfläche des Zapfenabschnitts angeordnet. Vorteilhaft ist die Strukturierung einstückig mit der Kugelgelenkschutzkappe ausgebildet und zusammen mit dieser durch Spritzgießen hergestellt. Durch die Strukturierung heben sich die Griffbereiche auch optisch deutlich von der insbesondere glatt ausgebildeten Außenumfangsfläche des Zapfenabschnitts ab. Unter einer Riffelung ist in diesem Zusammenhang eine Reihe von parallel beabstandeten rillenartigen Vertiefungen und entsprechenden Erhöhungen zu verstehen, wobei sich die rillenartigen Vertiefungen und die entsprechenden Erhöhungen vorteilhaft in Umfangsrichtung des Zapfenabschnitts erstrecken, um eine radiale Entformbarkeit der Kugelgelenkschutzkappe nach dem Spritzgießen zu ermöglichen. Alternativ ist auch eine axiale Entformung möglich, insbesondere eine axiale Zwangsentformung, wenn die Riffelung nicht zu stark ausgeprägt ist.

Vorzugsweise sind die Griffbereiche in radial voneinander abgewandten Umfangsabschnitten des Zapfenabschnitts angeordnet, wobei die Umfangsabschnitte mit den Griffbereichen mit einem maximalen Abstand des Zapfenabschnitts voneinander beabstandet sind. Auf diese Weise wird eine Orientierungshilfe geschaffen, falls die Griffbereiche nach mehrmaligem Durchlauf eines Lackierprozesses nicht mehr oder nur noch schlecht erkennbar sein sollten.

Vorteilhaft sind die Griffbereiche in Umfangsrichtung des Zapfenabschnitts um 90 Grad versetzt zu den Rippen des Rippenpaares angeordnet, so dass in Verbindung mit dem unrunden, insbesondere elliptischen, Querschnitt des Zapfenabschnitts ein radiales Zusammendrücken der Griffbereiche in Richtung Mittelachse eine Vergrößerung des radialen Abstands zwischen den sich gegenüberliegenden Rippen des Rippenpaares bewirkt. Durch den umfänglichen Versatz zwischen den Griffbereichen und den Rippen wird beim Zusammendrücken der Griffbereiche die Rastverbindung zwischen den Rippen und den zugeordneten Gewinderillen des Gewindeabschnitts gelöst. Dies stellt insbesondere beim Abziehen der Kugelgelenkschutzkappe von dem Zapfenteil eine Unterstützung dar, weil bei zusammengedrückten Griffbereichen die dann noch für das Abziehen erforderliche Kraft relativ gering ist. Je nachdem, wie beim Aufstecken der Kugelgelenkschutzkappe vorgegangen wird, kann die Anordnung der Griffbereiche relativ zu den Rippen auch hier eine Unterstützung darstellen, wobei das Aufstecken alternativ auch durch Drücken mit dem Handballen gegen den Boden des Zapfenabschnitts bewerkstelligt werden kann. In Verbindung mit dem zuvor beschriebenen, umfänglichen Versatz um 90 Grad stellen die Griffbereiche, die sich sowohl optisch als auch von der Haptik her abheben, auch eine Orientierungshilfe dar, um besser erkennen zu können, welche gegenüberliegenden Umfangsbereiche zusammengedrückt werden müssen, um ein Aufweiten im Bereich der Rippen und somit ein Lösen der vorgenannten Rastverbindung zu bewirken.

Gemäß einer Alternative ist der Balgabschnitt zum Verbessern der thermischen Isolation des Dichtungsbalgs doppelwandig ausgebildet, insbesondere weist der Balgabschnitt eine umfänglich umlaufende Innenwandung und eine zu dieser zumindest im Wesentlichen konzentrisch angeordnete und zugleich in Radialrichtung nach außen beabstandete Zusatzwandung auf. Die Innenwandung erstreckt sich zumindest im Wesentlichen zylinderringförmig in Axialrichtung der Kugelgelenkschutzkappe. Die Zusatzwandung ist ebenfalls ringartig geschlossen ausgebildet. Durch die Innenwandung und die von dieser beabstandete Zusatzwandung wird ein doppelwandiger Bereich der Kugelgelenkschutzkappe mit einer zwischenliegenden Luftschicht geschaffen. Aufgrund einer wärmeisolierenden Wirkung der Luftschicht wird verhindert, dass von außen auf den doppelwandigen Bereich einwirkende Wärme zu einer Schädigung des aus einem relativ temperaturempfindlichen Elastomermaterial gebildeten Dichtungsbalgs führt. Bei der Wärmeeinwirkung handelt es sich insbesondere um Strahlungswärme aus einem Warmfügeprozess, insbesondere einem Warmprägen, das dazu dient, das Kugelgelenk mit einem rohrförmigen Verbindungselement form- und kraftschlüssig zu verbinden. Insbesondere wird der Abstand zwischen der Innenwandung und der Zusatzwandung abschnittsweise durch eine Stützstruktur mit sich in Axialrichtung erstreckenden Stegen überbrückt.

Die Erfindung bezieht sich weiterhin auf ein fertig montiertes Kugelgelenk mit einer aufgesteckten Kugelgelenkschutzkappe wie zuvor beschrieben, wobei ein Zapfenabschnitt der Kugelgelenkschutzkappe einen Zapfenteil des Kugelgelenks vollständig abdichtet. Das Aufstecken der Kugelgelenkschutzkappe erfolgt bevorzugt durch eine lineare, also rotationsfreie, Aufschiebebewegung. Insbesondere erfolgt die vollständige Abdichtung des Zapfenteils durch ein Zusammenwirken des Zapfenabschnitts der Kugelgelenkschutzkappe mit einem Dichtungsbalg des Kugelgelenks. Vorteilhaft ist das Kugelgelenk als ein Radialkugelgelenk zur Aufnahme von überwiegend in Radialrichtung wirkenden Kräften ausgebildet. Vorteilhaft weist das Kugelgelenk einen einstückig mit einem Gehäuse desselben ausgebildeten Schaftteil auf, der zum Verbinden des Kugelgelenks mit einem Anschlussbauteil geeignet ist. Insbesondere sind ein sich in einer nicht ausgelenkten Stellung in Axialrichtung erstreckender Kugelzapfen und der Schaftteil zumindest im Wesentlichen rechtwinklig zueinander ausgerichtet, weshalb ein solches Kugelgelenk auch als Winkelgelenk bezeichnet wird. Aus Bauraumgründen kann es erforderlich sein, den Schaftteil gekröpft, also mit einem Winkelversatz zu dem Gehäuse auszubilden. Trotzdem handelt es sich auch hierbei um ein Winkelgelenk im Sinne der vorliegenden Erfindung.

Vorteilhaft sind zwei Rippen eines Rippenpaares der Kugelgelenkschutzkappe in deren Axialrichtung um die halbe Steigung eines Außengewindes eines Gewindeabschnitts des Zapfenteils versetzt angeordnet. Durch diesen Versatz wirken die Rippen quasi wie ein Innengewinde, das mit dem Außengewinde des Gewindeabschnitts in Eingriff steht. Allerdings bieten die Rippen gegenüber einem Gewinde den Vorteil, dass die Kugelgelenkschutzkappe schnell auf den Zapfenteil aufsteckbar und ebenso schnell wieder von diesem abziehbar ist, wohingegen ein Auf- und Abschrauben der Kugelgelenkschutzkappe zeitaufwendiger wäre. Darüber hinaus ist das Aufstecken und Abziehen auch in ergonomischer Hinsicht dem Auf- und Abschrauben vorzuziehen, weil Schrauben von Hand, über einen längeren Zeitraum verrichtet, zu einer erhöhten Beanspruchung des Handgelenks führt.

Bevorzugt tauchen die Rippen zumindest mit einem umfänglichen Mittenbereich teilweise oder vollständig in eine jeweils zugeordnete Gewinderille des Außengewindes des Gewindezapfens ein, insbesondere liegt eine Wandung des Zapfenabschnitts zumindest in dem umfänglichen Mittenbereich an Gewindespitzen des Außengewindes des Gewindeabschnitts an. Durch diese Ausgestaltung wird die Zwangsentformung des Innenraums der Kugelgelenkschutzkappe nach dem Spritzgießen begünstigt, weil die Rippen nur eine geringe Ausdehnung in Radialrichtung zu der Mittelachse hin aufweisen. Inwieweit die Rippen jeweils über ihre komplette umfängliche Erstreckung in die Gewinderillen eintauchen, hängt davon ab, welchen Querschnittsverlauf die Rippen über ihre Längserstreckung in Umfangsrichtung aufweisen und welche Querschnittsform der Zapfenabschnitt im Bereich der Rippen aufweist. Inwieweit die Wandung über den Bereich der umfänglichen Mitten der Rippen hinaus auch im weiteren Verlauf der Rippen in Umfangsrichtung an den Gewindespitzen anliegt, hängt von der jeweils vorliegenden konkreten Ausbildung des unrunden, insbesondere elliptischen, Querschnitts des Zapfenabschnitts ab. Durch die Begriffswahl, wonach die Kugelgelenkschutzkappe auf den Zapfenabschnitt "aufsteckbar" ist, soll im Zusammenhang mit der vorliegenden Erfindung verdeutlicht werden, dass die Rippen nach erfolgtem linearen Aufschieben in die jeweils zugeordnete Gewinderille nach Art einer Rastverbindung einrasten.

In vorteilhafter Weiterbildung der Erfindung ist der Dichtungsbalg durch die Kugelgelenkschutzkappe in Axialrichtung gegenüber seiner Ausdehnung im entspannten Zustand zusammengedrückt, wodurch ein innenliegender, zwischen dem Zapfenabschnitt und dem Balgabschnitt angeordneter und zugleich in Umfangsrichtung des Zapfenabschnitts umlaufender Dichtbereich der Kugelgelenkschutzkappe dichtend gegen eine formkorrespondierende, ebenfalls umlaufende Dichtfläche des Dichtungsbalgs gedrückt ist. Auf diese Weise ist der Zapfenteil bei aufgesteckter Kugelgelenkschutzkappe vollständig abgedichtet und auch gegen korrosiv wirkende Medien geschützt, die über die Öffnung des Zapfenabschnitts, die zu dem Balgabschnitt hin gewandt ist, in den Zapfenabschnitt eindringen könnten. Aufgrund seines elastomeren Materials hat der Dichtungsbalg das Bestreben, nach einer Verformung unter Aufbringung einer elastischen Rückstellkraft in seinen entspannten Zustand zurückzukehren. Diese elastische Rückstellkraft des Dichtungsbalgs wirkt somit gegen den umlaufenden Dichtbereich der Kugelgelenkschutzkappe und wird über die Wandung des Zapfenabschnitts sowie das oder die Rippenpaar(e) in die Gewinderillen des Gewindeabschnitts eingeleitet. Die elastische Rückstellkraft des Dichtungsbalgs ist somit zugleich die zwischen dem umlaufenden Dichtbereich der Kugelgelenkschutzkappe und der umlaufenden Dichtfläche wirkende Dichtkraft. Zwischen der elastischen Rückstellkraft bzw. der Dichtkraft und der durch die formschlüssige Rastverbindung zwischen den Rippen und den Gewinderillen des Gewindeabschnitts maximal in Axialrichtung übertragbaren Kraft stellt sich ein Kräftegleichgewicht ein. Bei aufgesteckter Kugelgelenkschutzkappe nimmt der Dichtungsbalg in Axialrichtung zumindest im Wesentlichen, die Position ein, die er einnimmt, wenn das fertig montierte Kugelgelenk im Fahrzeug verbaut ist.

Ein weiterer Aspekt der Erfindung bezieht sich auf eine Verwendung einer Kugelgelenkschutzkappe und/oder eines fertig montierten Kugelgelenks wie zuvor beschrieben an einem Mehrpunktlenker, insbesondere an einem Zweipunktlenker. Bevorzugt weist der Mehrpunktlenker ein stangenartiges Verbindungselement auf, an das das Kugelgelenk mit einem Schaftteil starr angebunden ist. Das Verbindungselement kann dabei als ein gerades oder als ein gebogenes Rohr ausgebildet sein. Ist der Mehrpunktlenker als Zweipunktlenker ausgebildet, kann dieser alternativ auch zwei jeweils endseitig und starr an das Verbindungselement angebundene Kugelgelenke der zuvor beschriebenen Art aufweisen. Der Zweipunktlenker kann ausgebildet sein als Lenkstange, Spurstange, Panhardstab, Koppelstange zur Anbindung eines Wankstabilisators an einen Fahrzeugrahmen oder als Koppelstange zur gelenkigen Verbindung von zwei Lenkungsteilen, beispielsweise zwei Lenkhebeln. Der Zweipunktlenker kann eine feste Länge aufweisen oder längeneinstellbar sein.

Darüber hinaus schlägt die Erfindung eine Verwendung einer Kugelgelenkschutzkappe wie zuvor beschrieben vor, wobei die Kugelgelenkschutzkappe für Kugelgelenke mit unterschiedlich ausgebildeten Zapfenteilen, insbesondere unterschiedlich langen Zapfenteilen, einsetzbar ist. Voraussetzung ist lediglich, dass der jeweilige Zapfenteil einen Gewindeabschnitt aufweist, der bei auf den Zapfenteil aufgesteckter Kugelgelenkschutzkappe so angeordnet ist, dass innenliegende Rippen der Kugelgelenkschutzkappe in Gewinderillen des Gewindeabschnitts verrastend eingreifen können. Daher kann der Abstand zwischen einem Boden der Kugelgelenkschutzkappe und einem dem Boden zugewandten, stirnseitigen Ende des Zapfenteils bei aufgesteckter Kugelgelenkschutzkappe bei Kugelgelenken mit unterschiedlich langen Zapfenteilen unterschiedlich groß sein. Insbesondere findet eine derart ausgelegte Kugelgelenkschutzkappe Verwendung für unterschiedlich lange Zapfenteile, deren Gewindeabschnitte aber jeweils den gleichen Gewindetyp, beispielsweise ein eingängiges Feingewinde, und den gleichen Außendurchmesser aufweisen.

Die Erfindung bezieht sich ferner auf eine Verwendung einer Kugelgelenkschutzkappe wie zuvor beschrieben, wobei die Kugelgelenkschutzkappe nach erfolgter Fertigmontage eines Kugelgelenks bis zum Verbau des Kugelgelenks in einem Fahrzeug durchgängig auf einem Zapfenteil des Kugelgelenks sitzt. Die Kugelgelenkschutzkappe verbleibt somit von dem Zeitpunkt, an dem die Montage des Kugelgelenks abgeschlossen ist, bis unmittelbar vor dem Verbau des Kugelgelenks in ein Fahrzeug ohne zwischenzeitliches Abziehen und Wiederaufstecken auf dem Zapfenteil des Kugelgelenks. Dies wird durch die zuvor beschriebene, universelle Auslegung der Kugelgelenkschutzkappe möglich. Zum einen weist die Kugelgelenkschutzkappe die für eine Montageschutzkappe erforderlichen Eigenschaften auf, durch die mechanische Beschädigungen des Kugelgelenks, insbesondere des Dichtungsbalgs und des Zapfenteils, während der Montage, insbesondere während des Verbindens des Kugelgelenks mit dem vorgenannten Verbindungselement, vermieden werden. Zum anderen schützt die Kugelgelenkschutzkappe insbesondere den metallisch blanken und daher sehr korrosionsempfindlichen Kugelzapfen während des dem Lackieren vorgeschalteten Reinigens. Dabei verhindert die Kugelgelenkschutzkappe durch ihre guten Abdichtungseigenschaften ein Eindringen von wässrigen Medien in das Gehäuseinnere des Kugelgelenks.

Darüber hinaus bietet die Kugelgelenkschutzkappe dem Kugelgelenk während des Lackierens, des anschließenden Transports und evtl. auch bei Zwischenlagerungen Schutz vor flüssigen, festen und gasförmigen Medien, die schädigend insbesondere auf den Kugelzapfen einwirken könnten. Durch die Verwendung der derart universell ausgelegten Kugelgelenkschutzkappe können erhebliche Kosten eingespart werden, die heute für das Wechseln von Spezialschutzkappen anfallen, die beispielsweise nur für die Montage, nur für die wässrige Lackiervorbehandlung oder nur für den Transport geeignet sind. Aus technischer Sicht ist eine Mehrfachverwendung der Kugelgelenkschutzkappe ohne weiteres möglich, weil deren struktureller Aufbau, beispielsweise durch den einstückig mit der Wandung ausgebildeten Boden und die aufgrund ihrer nur geringen radialen Erstreckung formstabilen Rippen, sehr robust ist. Ob dies wirtschaftlich lohnend ist oder ob eine Verwendung der Kugelgelenkschutzkappe als Einweg-Kugelgelenkschutzkappe sinnvoller ist, hängt in erster Linie von dem Aufwand für die Rückführung der Kugelgelenkschutzkappe zum Montageort des Kugelgelenks ab.

Im Folgenden wird die Erfindung anhand lediglich Ausführungsbeispiele darstellender Zeichnungen näher erläutert, wobei sich gleiche Bezugszeichen auf gleiche Bauteile oder Elemente beziehen. Dabei zeigt:
Fig. 1 in einer perspektivischen Schnittdarstellung eine Kugelgelenkschutzkappe gemäß einer ersten Ausführungsform der Erfindung;
Fig. 2 in einer Seitenansicht die Kugelgelenkschutzkappe aus Figur 1;
Fig. 3a in einer gegenüber Figur 2 um 90 Grad gedrehten Seitenansicht die Kugelgelenkschutzkappe aus Figur 2;
Fig. 3b in einer Schnittdarstellung die Kugelgelenkschutzkappe aus Figur 3a gemäß dem dort angegebenen Schnittverlauf B - B;
Fig. 4 in einer perspektivischen Schnittdarstellung eine Kugelgelenkschutzkappe gemäß einer zweiten Ausführungsform der Erfindung;
Fig. 5 in einer Schnittdarstellung ein Kugelgelenk mit einer Kugelgelenkschutzkappe gemäß der ersten Ausführungsform;
Fig. 6 in einer Schnittdarstellung das Kugelgelenk aus Figur 5 und
Fig. 7 in einer perspektivischen Ansicht einen Zweipunktlenker.

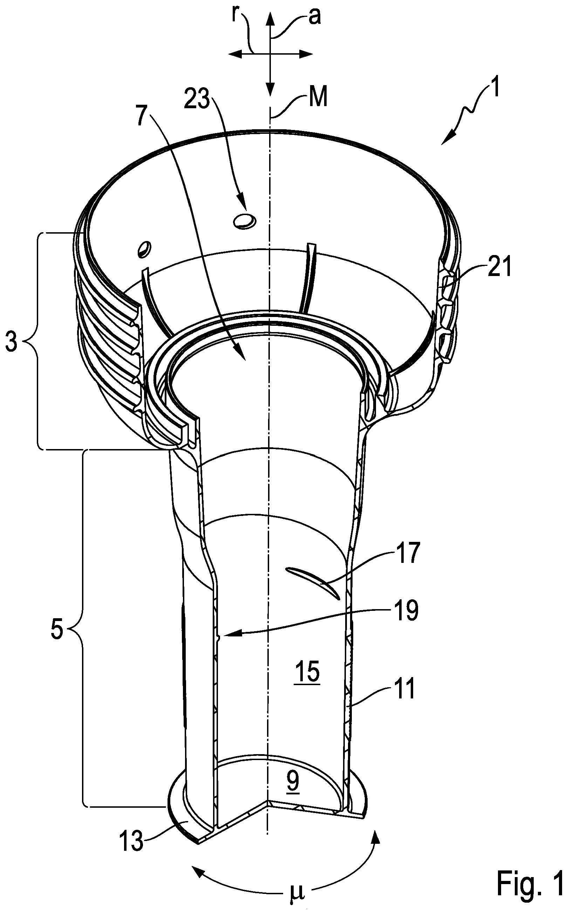

Fig. 1 zeigt eine erste Ausführungsform einer Kugelgelenkschutzkappe 1 zum Schutz eines fertig montierten Kugelgelenks 50, wobei die Kugelgelenkschutzkappe 1 einen Balgabschnitt 3 zur Abdeckung eines Dichtungsbalgs 51 des fertig montierten Kugelgelenks 50 und einen sich an den Balgabschnitt 3 anschließenden Zapfenabschnitt 5 zur Abdeckung eines Zapfenteils 53 des fertig montierten Kugelgelenks 50 aufweist. Der Zapfenabschnitt 5 weist zu dem Balgabschnitt 3 hin eine Öffnung 7 auf, weshalb der Zapfenabschnitt 5 zu dem Balgabschnitt 3 hin offen ausgebildet ist. Eine Wandung 21 des Balgabschnitts 3 ist von mehreren Ablauföffnungen 23 durchsetzt, die dazu dienen, flüssige Medien, wie beispielsweise wässrige Reinigungsmedien, aus dem Inneren des Balgabschnitts 3 herauszuleiten. Der Zapfenabschnitt 5 ist in einer Axialrichtung a auf den Zapfenteil 53 des Kugelgelenks 50 aufsteckbar und darüber hinaus zur vollständigen Abdichtung des Zapfenteils 53 becherförmig ausgebildet, um den Zapfenteil 53 auf diese Weise durch vollständige Abdichtung desselben insbesondere vor Verschmutzung und Korrosion zu schützen. An dem der Öffnung 7 des Zapfenabschnitts 5 in Axialrichtung a gegenüberliegenden Ende ist der Zapfenabschnitt 5 durch einen Boden 9 verschlossen. Von dem Boden 9 ausgehend, erstreckt sich in Axialrichtung a auf den Balgabschnitt 3 zu eine umlaufende Wandung 11 des Zapfenabschnitts 5, die einstückig mit dem Boden 9 ausgebildet ist. Der Boden 9 und die Wandung 11 machen die vorgenannte Becherform des Zapfenabschnitts 5 aus. Die Innenquerschnittsfläche der Wandung 11 des Zapfenabschnitts 5 und die Innenquerschnittsfläche der Wandung 21 des Balgabschnitts 3 vergrößern sich ausgehend von dem Boden 9 in Axialrichtung a kontinuierlich um einen geringen Betrag, um die Entformbarkeit der Kugelgelenkschutzkappe 1 nach einem Spritzgießvorgang zu gewährleisten.

Der Balgabschnitt 3 weist einen größeren Umfang auf als der Zapfenabschnitt 5, wodurch die Kugelgelenkschutzkappe 1 kelchartig ausgebildet ist. In einer Radialrichtung r, die sich senkrecht zu der Axialrichtung a erstreckt, ist der Boden 9 um einen ebenfalls umlaufend ausgebildeten Kragen 13 erweitert, wobei der Kragen 13 im Wesentlichen kreisringförmig ausgebildet ist. An einer Innenumfangsfläche 15 seiner Wandung 11 weist der Zapfenabschnitt 5 eine Rastkontur 17, 19 auf, die als ein Rippenpaar 17, 19 ausgebildet ist, dessen zwei Rippen 17, 19 einstückig mit der Innenumfangsfläche 15 der Wandung 11 ausgebildet sind. Die Rippen 17, 19 erstrecken sich jeweils um weniger als 180 Grad in Umfangsrichtung u des Zapfenabschnitts 5 und bauen zugleich von der Innenumfangsfläche 15 der Wandung 11 weg radial in Richtung der Mittelachse M des Zapfenabschnitts 5 auf. Die Wandung 11 des Zapfenabschnitts 5 erstreckt sich in Axialrichtung a ohne Radialversatz, also ohne Konturbereiche, die sich zumindest im Wesentlichen in Radialrichtung r erstrecken, wie beispielsweise der Kragen 13. Daher ist die Kugelgelenkschutzkappe 1 für Kugelgelenke 50 mit unterschiedlich langen Zapfenteilen 53 geeignet. Voraussetzung ist lediglich, dass der jeweilige Zapfenteil 53 einen Gewindeabschnitt 55 aufweist, der bei auf den Zapfenteil 53 aufgesteckter Kugelgelenkschutzkappe 1 so angeordnet ist, dass die Rippen 17, 19 in Gewinderillen 57 des Gewindeabschnitts 55 verrastend eingreifen können. Daher kann der Abstand zwischen dem Boden 9 der Kugelgelenkschutzkappe 1 und dem dem Boden 9 zugewandten stirnseitigen Ende des Zapfenteils 53 bei aufgesteckter Kugelgelenkschutzkappe 1 bei Kugelgelenken 50 mit unterschiedlich langen Zapfenteilen 53 unterschiedlich groß sein. Die Kugelgelenkschutzkappe 1 besteht aus Polypropylen, einem Kunststoff mit elastisch federnden Eigenschaften, und ist im Spritzgussverfahren hergestellt.

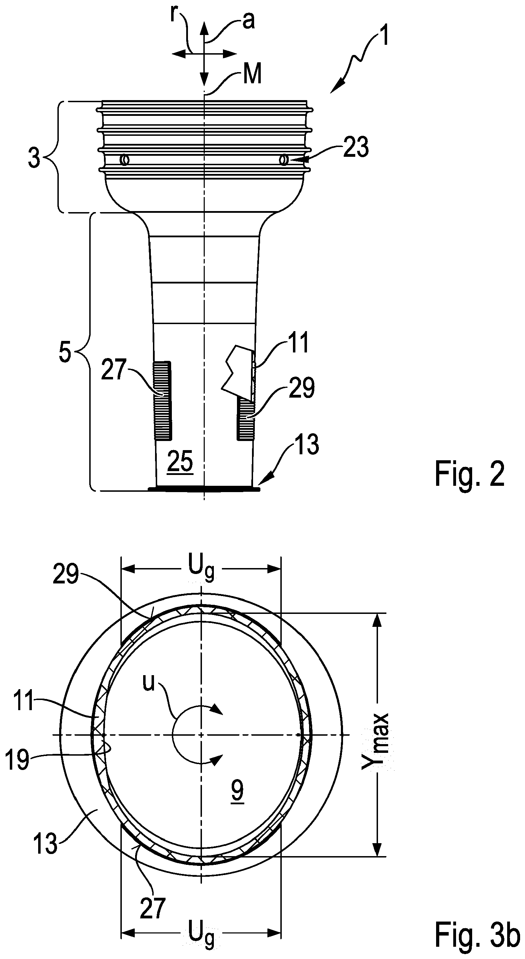

In Fig. 2 ist ebenfalls zu erkennen, dass sich die Querschnitte der Wandungen 21, 11 von Balgabschnitt 3 und Zapfenabschnitt 5 in Axialrichtung a zu dem Kragen 13 hin verjüngen. Weiterhin ist zu erkennen, dass der Zapfenabschnitt 5 an dessen Außenumfangsfläche 25 zwei in Radialrichtung r gegenüberliegend angeordnete Griffbereiche 27, 29 aufweist, wobei die Griffbereiche 27, 29 zur Reibungserhöhung beim Aufstecken und/oder Abziehen der Kugelgelenkschutzkappe 1 auf den bzw. von dem Zapfenteil 53 des Kugelgelenks 50 eine in Umfangsrichtung u des Zapfenabschnitts 5 verlaufende Riffelung aufweisen. Der Balgabschnitt 3 weist an dessen Außenumfangsfläche mehrere, in Axialrichtung a parallel zueinander beabstandete und zugleich in Umfangsrichtung des Balgabschnitts 3 verlaufende Verstärkungsrippen auf, die zum Schutz des Dichtungsbalgs 51 vor mechanischer Beschädigung dienen, wobei die Umfangsrichtung des Balgabschnitts 3 der Umfangsrichtung u des Zapfenabschnitts 5 entspricht.

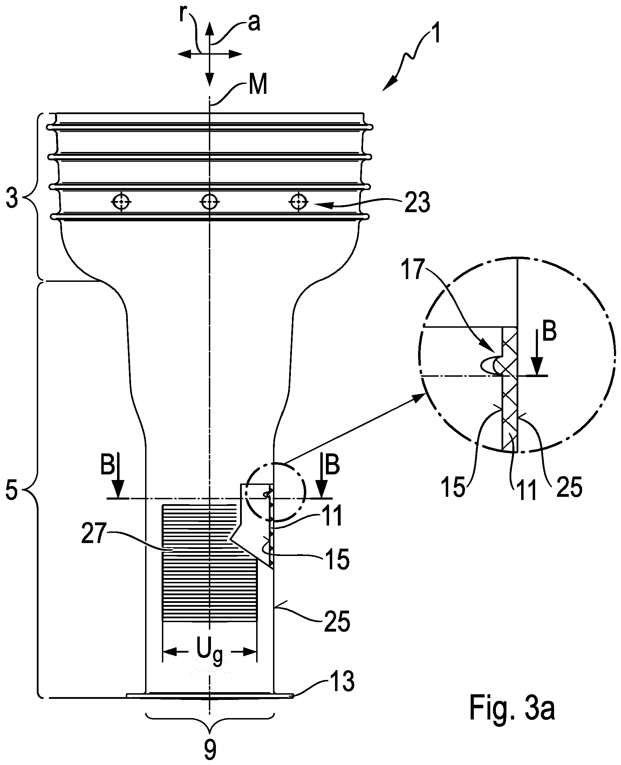

Der in Fig. 3a dargestellte Griffbereich 27 ist gegenüber der Darstellung in Fig. 2 um 90 Grad um die Mittelachse M gedreht. Rechts neben der Kugelgelenkschutzkappe 1 ist in einer vergrößerten Detailansicht die geschnitten dargestellte Wandung 11 der Kugelgelenkschutzkappe 1 zu erkennen. Ebenfalls innerhalb dieser Detailansicht ist die geschnitten dargestellte Rippe 17 zu erkennen, wobei die Schnittebene, bei Betrachtung in Umfangsrichtung u durch die Rippenmitte verläuft. An dieser Stelle weist die Rippe 17, die einstückig mit der Wandung 11 ausgebildet ist, eine maximale Erstreckung in Axialrichtung a auf. Weiterhin verjüngt sich die Rippe 17 im Querschnitt zu der Mittelachse M hin, wobei der Querschnitt halbkreisförmig ausgebildet ist und die Sehne dieses Halbkreises in der Innenumfangsfläche 15 der Wandung 11 des Zapfenabschnitts 5 liegt. Wie in der vergrößerten Detailansicht weiterhin zu erkennen ist, verläuft der Schnitt B-B gerade unterhalb der rechten Rippe 17. Nicht zu erkennen ist, dass der Schnitt B-B durch die nicht sichtbare linke Rippe 19 verläuft. Dies liegt darin begründet, dass die beiden Rippen 17, 19 des Rippenpaares in Axialrichtung a der Kugelgelenkschutzkappe 1 versetzt angeordnet sind.

Die in Fig. 3b dargestellte, waagerechte Symmetrielinie verläuft auf der rechten Seite nur durch die Wandung 11, weil der Schnitt B-B in Fig. 3a gerade unterhalb der rechten Rippe 17 verläuft und diese Rippe 17 daher nicht geschnitten wird. Auf der horizontal gegenüberliegenden linken Seite verläuft die waagerechte Symmetrielinie durch die Wandung 11 und zugleich durch die linke Rippe 19. Daher weist hier die sich ergebende Schnittfläche eine größere Erstreckung in Radialrichtung r auf als die gegenüberliegende Schnittfläche auf der rechten Seite. Weiterhin ist auf der linken Seite zu erkennen, dass die linke Rippe 19 in deren Mitte in Umfangsrichtung u des Zapfenabschnitts 5 eine maximale radiale Erstreckung aufweist und zu ihren beiden umfänglichen Enden hin jeweils radial stetig auslaufend in die Wandung 11 des Zapfenabschnitts 5 übergeht.

Weiterhin zeigt Fig. 3b, dass der Zapfenabschnitt 5 im Bereich des Rippenpaares 17, 19 im Querschnitt elliptisch ausgebildet ist, wobei die Rippen 17, 19 des radial gegenüberliegenden Rippenpaares einen minimalen radialen Abstand rₘᵢₙ zueinander aufweisen. Wie den Figuren 3a und 3b insbesondere bei zusammenschauender Betrachtung zu entnehmen ist, sind die Griffbereiche 27, 29 in Umfangsrichtung u des Zapfenabschnitts 5 in radial voneinander abgewandten Umfangsabschnitten U_{g} angeordnet. Die Umfangsabschnitte U_{g} mit den Griffbereichen 27, 29 sind mit einem maximalen Abstand des Zapfenabschnitts 5 voneinander beabstandet. Aufgrund der Ausrichtung des elliptischen Querschnitts des Zapfenabschnitts 5 weisen die Umfangsabschnitte U_{g} einen maximalen radialen Abstand rₘₐₓ zueinander auf, der in den in Radialrichtung r gegenüberliegenden umfänglichen Mitten der Umfangsabschnitte U_{g} dem Doppelten der großen Halbachse des elliptischen Querschnitts entspricht. Zugleich sind die Griffbereiche 27, 29 in Umfangsrichtung u des Zapfenabschnitts 5 um 90 Grad versetzt zu den Rippen 17, 19 des Rippenpaares angeordnet. Durch diesen umfänglichen Versatz um 90 Grad wird in Verbindung mit dem elliptischen Querschnitt des Zapfenabschnitts 5 im Bereich der Rippen 17, 19 erreicht, dass ein radiales Zusammendrücken der Griffbereiche 27, 29 in Richtung Mittelachse M eine Vergrößerung des radialen Abstands zwischen den sich gegenüberliegenden Rippen 17, 19 des Rippenpaares bewirkt. Im Bereich der umfänglichen Mitten der Rippen 17, 19 weist die Innenumfangsfläche 15 des Zapfenabschnitts 5 einen minimalen Abstand in Radialrichtung r auf, der dem Doppelten der kleinen Halbachse einer in die Innenumfangsfläche 15 einbeschriebenen Ellipse entspricht. Die große und die kleine Halbachse des elliptischen Querschnitts im Bereich des Rippenpaares 17, 19 liegen in den in Fig. 3b senkrecht zueinander ausgerichteten Symmetrieachsen.

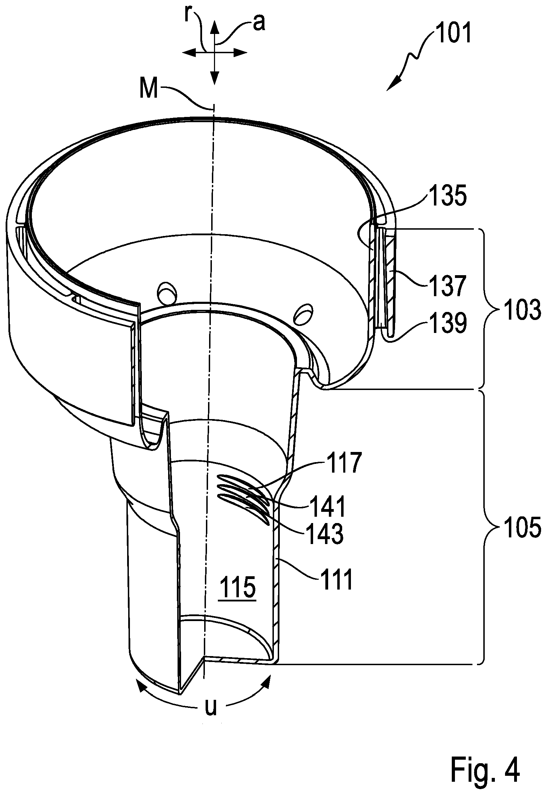

Fig. 4 zeigt eine ebenfalls kelchartig ausgebildete Kugelgelenkschutzkappe 101 gemäß einer zweiten Ausführungsform mit einem Balgabschnitt 103, der zum Schutz des Dichtungsbalgs 51 vor schädlicher Wärmeeinwirkung doppelwandig ausgebildet ist. Der Balgabschnitt 103 weist neben einer sich im Wesentlichen zylinderringförmig in Axialrichtung a der Kugelgelenkschutzkappe 101 erstreckenden, umlaufenden Innenwandung 135 eine von dieser konzentrisch in Radialrichtung r nach außen beabstandete Zusatzwandung 137 auf, die ringartig geschlossen ausgebildet ist. Zwischen der Innenwandung 135 und der von dieser beabstandeten Zusatzwandung 137 befindet sich eine Luftschicht, die wärmeisolierend wirkt. Der Abstand zwischen der Innenwandung 135 und der Zusatzwandung 137 wird abschnittsweise durch eine Stützstruktur mit sich in Axialrichtung a erstreckenden Stegen 139 überbrückt. Ein Zapfenabschnitt 105, der sich in Axialrichtung a an einen Balgabschnitt 103 anschließt, weist drei in Axialrichtung a der Kugelgelenkschutzkappe 101 parallel zueinander beabstandete Rippenpaare auf, von denen jeweils nur eine Rippe 117, 141, 143 zu erkennen und die andere durch eine Wandung 111 des Zapfenabschnitts 105 verdeckt ist. Die Rippenpaare mit den drei sichtbaren Rippen 117, 141, 143 erstrecken sich von einer Innenumfangsfläche 115 des Zapfenabschnitts 105 weg in Richtung der Mittelachse M des Zapfenabschnitts 105.

Im Gegensatz zu der Kugelgelenkschutzkappe 1 gemäß der ersten Ausführungsform mit dem Kragen 13 weist die Kugelgelenkschutzkappe 101 gemäß der zweiten Ausführungsform keinen Kragen auf, um Werkzeugkosten zu sparen. Die Kugelgelenkschutzkappe 101 besteht ebenfalls aus Polypropylen und ist im Spritzgussverfahren hergestellt. Da die Zwischenräume zwischen der Innenwandung 135 des Balgabschnitts 103, der Zusatzwandung 137 und den Stegen 139 in Axialrichtung a nach dem Spritzgießen im Gegensatz zu der ersten Ausführungsform in Axialrichtung a entformt werden müssen, würde ein Kragen wie zuvor beschrieben das Spritzgusswerkzeug für die Kugelgelenkschutzkappe 101 gemäß der zweiten Ausführungsform erheblich aufwendiger machen und somit verteuern. Der Zapfenabschnitt 115 weist ebenfalls Griffbereiche 145 analog zu den zuvor beschriebenen auf, die hier allerdings aufgrund der vorliegenden Schwenkung der Kugelgelenkschutzkappe 101 in Verbindung mit dem vorliegenden Teilschnitt nicht sichtbar sind. Auch sonst entspricht die zweite Ausführungsform im Wesentlichen der ersten. Alternativ kann bei dieser Ausführungsform aber auch auf Griffbereiche verzichtet werden, insbesondere wenn sich eine Zwangsentformung der Griffbereiche in Axialrichtung a schwierig gestalten sollte. In diesem Fall kann sich der Werker zum Auffinden der Bereiche, die zum einfachen Abziehen der Kugelgelenkschutzkappe 101 von dem Zapfenteil 53 zusammengedrückt werden müssen, problemlos auch an der elliptischen Querschnittsform des Zapfenabschnitts 105 orientieren.

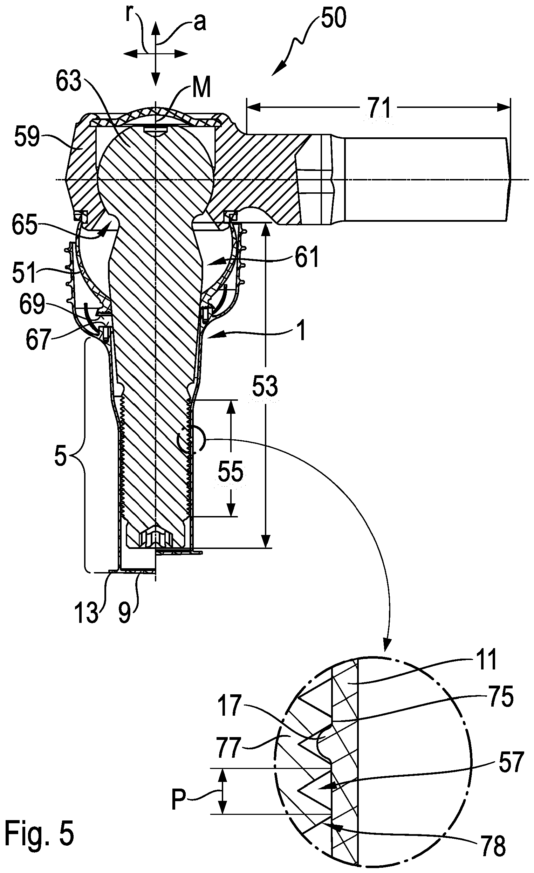

Fig. 5 zeigt das fertig montierte Kugelgelenk 50 mit der aufgesteckten Kugelgelenkschutzkappe 1 gemäß der ersten Ausführungsform im Schnitt, wobei die Schnittebene durch die umfängliche Mitte der Rippen 17, 19 verläuft. Bei aufgesteckter Kugelgelenkschutzkappe 1 sind die Axialrichtung a und die Radialrichtung r der Kugelgelenkschutzkappe 1 identisch mit der Axialrichtung a und der Radialrichtung r des Kugelgelenks 50. Die Mittelachse M der aufgesteckten Kugelgelenkschutzkappe 1 ist deckungsgleich mit der Mittelachse M des Kugelgelenks. In einer vergrößert dargestellten Detailansicht ist zu erkennen, dass die Rippen 17 zumindest mit ihren umfänglichen Mitten vollständig in die jeweils zugeordnete Gewinderille 57 eintauchen, so dass in diesem Schnitt die Wandung 11 des Zapfenabschnitts 5 an Gewindespitzen 75 eines Außengewindes 77 des Gewindeabschnitts 55 anliegt. Die umfänglichen Mitten der Rippen 17 liegen in Umfangsrichtung u in der Mitte eines umfänglichen Mittenbereichs der Rippen 17. Die Gewindespitzen 75 des Außengewindes 77, das als eingängiges metrisches Feingewinde ausgebildet ist, sind dabei nicht spitz sondern abgeflacht ausgeführt. Der in Axialrichtung a gemessene Abstand von einer Gewindespitze 75 zu der nächstliegenden wird als Gewindesteigung P oder auch einfach nur als Steigung des Außengewindes 77 bezeichnet. Die Rippen 17, 19 weisen dagegen keine Steigung auf, wodurch sie in ihrem Verlauf in Umfangsrichtung u auf Gewindeflanken 78 des Außengewindes 77 treffen und sich dort abstützen. Dieses Zusammenspiel des Außengewindes 77 mit den Rippen 17, 19 bewirkt zugleich ein Einrasten der Rippen 17, 19 in das Außengewinde 77. Das fertig montierte Kugelgelenk 50 ist als ein Gelenk mit einem Gehäuse 59 und einem darin dreh- und schwenkbeweglich gleitgelagerten metallischen Kugelzapfen 61 ausgeführt, wobei der Kugelzapfen 61 aus dem Zapfenteil 53 und einer einstückig mit diesem ausgebildeten und in dem Gehäuse 59 gleitgelagerten Gelenkkugel 63 gebildet ist.

Das Kugelgelenk 50 weist darüber hinaus einen einstückig mit dem Gehäuse 59 ausgebildeten Schaftteil 71 auf, der zum Verbinden des Kugelgelenks 50 mit einem rohrförmigen Verbindungselement 73 geeignet ist. Der Schaftteil 71 ist rechtwinklig zu dem nicht ausgelenkten Kugelzapfen 61 angeordnet, weshalb das Kugelgelenk auch als Winkelgelenk 50 bezeichnet wird. Das Kugelgelenk wird in der Praxis auch als Radialkugelgelenk 50 bezeichnet, weil es zur Übertragung von Kräften vorgesehen ist, die überwiegend in Radialrichtung r wirken. Der Zapfenteil 53 ist abschnittsweise konisch ausgebildet und erstreckt sich aus einer zapfenseitigen Gehäuseöffnung 65 aus dem Gehäuse 59 heraus, wobei das Kugelgelenk über den konischen Abschnitt an ein Anschlussbauteil anbindbar ist, beispielsweise einen Lenkhebel oder einen Radträger. Die zapfenseitige Gehäuseöffnung 65 ist durch den Dichtungsbalg 51 abgedichtet, wobei der Dichtungsbalg 51 mit einem ersten axialen Ende dichtend im Bereich der zapfenseitigen Gehäuseöffnung 65 an dem Gehäuse 59 anliegt und mit einem in Axialrichtung a gegenüberliegenden zweiten axialen Ende dichtend an dem konischen Abschnitt des Zapfenteils 53 anliegt. Die letztgenannte Anlage ist allerdings erst bei vollständig aufgesteckter Kugelgelenkschutzkappe 1 gegeben. Diese Situation ist in Fig. 5 rechts von der Mittelachse M dargestellt.

Auf der linken Seite von der Mittellinie M zeigt Fig. 5 die teilweise auf den Zapfenteil 53 aufgeschobene Kugelgelenkschutzkappe 1, die einen umlaufenden und sich zugleich in Radialrichtung r erstreckenden Dichtbereich 67 aufweist, der dem Dichtungsbalg 51 zugewandt ist. Weiterhin ist der Dichtbereich 67 innenliegend in dem Balgabschnitt 3 und zugleich zwischen dem Zapfenabschnitt 5 und dem Balgabschnitt 3 angeordnet. Der Dichtungsbalg 51 weist eine formkorrespondierende, ebenfalls umlaufende und sich zugleich in Radialrichtung r erstreckende Dichtfläche 69 auf, die dem Dichtbereich 67 zugewandt und zugleich von diesem beabstandet ist. Es ist deutlich zu erkennen, dass der Abstand der Dichtfläche 69 des Dichtungsbalgs 51 zu dem Gewindeabschnitt 55 des Zapfenteils 53 links von der Mittellinie M kleiner ist als rechts von der Mittellinie M. Dies liegt darin begründet, dass der Dichtungsbalg 51 auf der linken Seite in entspanntem Zustand vor dem Aufstecken der Kugelgelenkschutzkappe 1 dargestellt ist und auf der rechten Seite bei vollständig aufgesteckter Kugelgelenkschutzkappe 1. Hieraus wird deutlich, dass der Dichtungsbalg 51 durch die vollständig aufgeschobene Kugelgelenkschutzkappe 1 in Axialrichtung a gegenüber seiner Ausdehnung im entspannten Zustand zusammengedrückt ist, weshalb der Dichtbereich 67 der Kugelgelenkschutzkappe 1 dichtend gegen die formkorrespondierende Dichtfläche 69 des Dichtungsbalgs 51 gedrückt ist.

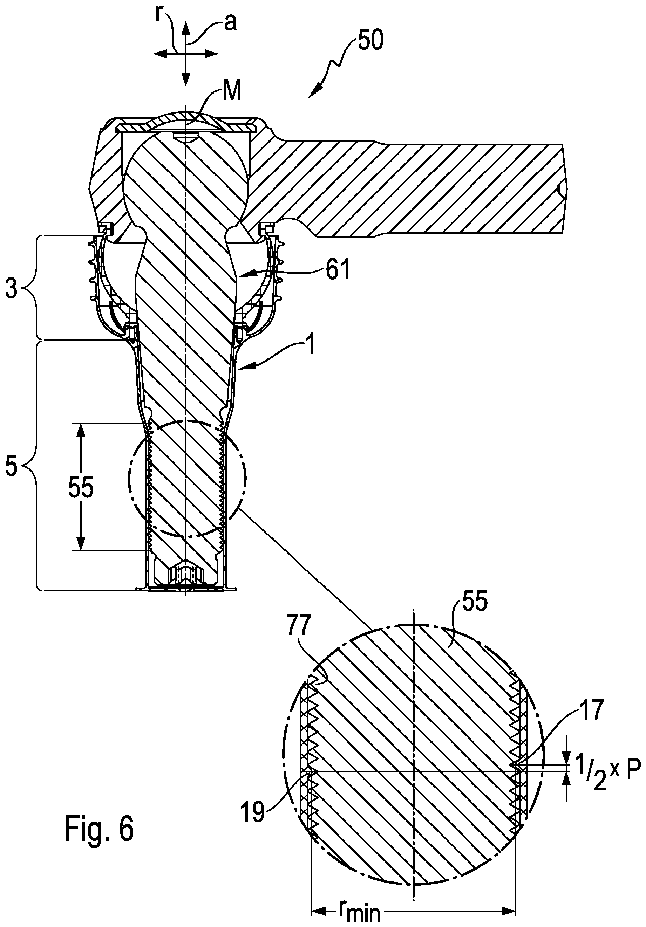

Fig. 6 zeigt das fertig montierte Kugelgelenk 50 mit aufgesteckter Kugelgelenkschutzkappe 1 wie zuvor beschrieben in einer Schnittdarstellung, wobei die Schnittebene analog zu Fig. 5 durch die umfänglichen Mitten der Rippen 17, 19 des Rippenpaares verläuft. Wie aus einer vergrößerten Detailansicht deutlich wird, sind die beiden Rippen 17, 19 in Axialrichtung a der Kugelgelenkschutzkappe 1 um die halbe Steigung P des Außengewindes 77 des Gewindeabschnitts 55 versetzt angeordnet. Dadurch greifen die Rippen 17, 19 formschlüssig in die zugeordneten Gewinderillen 57 des Außengewindes 77 ein, das bei einer Drehung um 180 Grad in Umfangsrichtung u ebenfalls in Axialrichtung a einen Versatz um die halbe Steigung P aufweist. In der vergrößerten Detaildarstellung ist ebenfalls verdeutlicht, dass die umfänglichen Mitten der Rippen 17, 19 des in Radialrichtung r gegenüberliegenden Rippenpaares einen minimalen radialen Abstand rₘᵢₙ zueinander aufweisen.

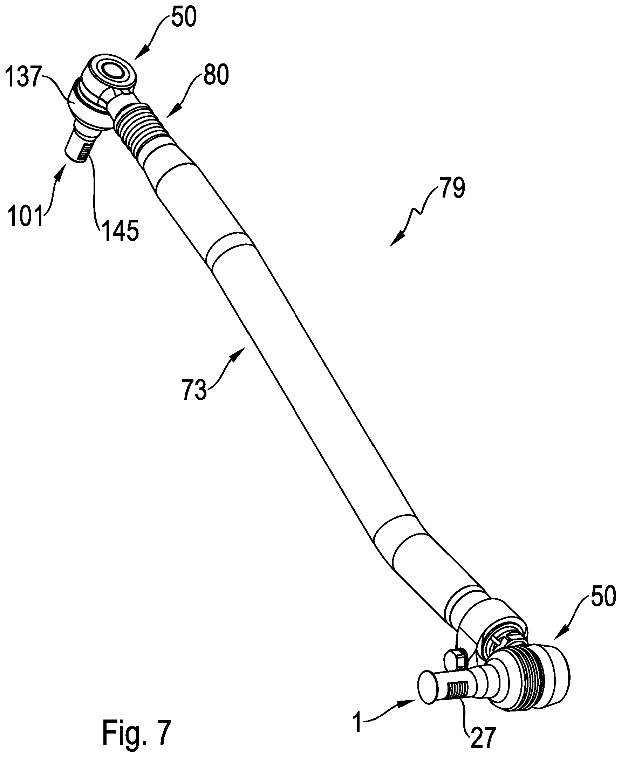

Fig. 7 zeigt einen als längeneinstellbare Lenkstange 79 ausgebildeten Zweipunktlenker, der aus dem rohrförmigen Verbindungselement 73 und jeweils endseitig daran starr angebundenen, fertig montierten Kugelgelenken 50 wie zuvor beschrieben gebildet ist. Die Anbindung ist einenends als eine Warmprägeverbindung 81 ausgebildet, die in der Praxis auch als Warmeinschlagverbindung bezeichnet wird. An dieser Stelle ist das Kugelgelenk 50 durch die aufgeschobene Kugelgelenkschutzkappe 101 mit dem doppelwandigen Balgabschnitt 103, der die Zusatzwandung 137 aufweist, geschützt. Bei diesem Einsatzfall wird die Kugelgelenkschutzkappe 101 mit doppelwandigem Balgabschnitt 103 verwendet, um insbesondere den Dichtungsbalg 51 des Kugelgelenks 50 während der Herstellung der Warmprägeverbindung 81 vor von dieser ausgehender Strahlungswärme zu schützen. Die Kugelgelenkschutzkappe 101 weist zwei in Umfangsrichtung u radial gegenüberliegende Griffbereiche 145 auf, von denen allerdings nur einer sichtbar ist. Das Kugelgelenk 50 an dem gegenüberliegenden Ende der Lenkstange 79 ist durch die Kugelgelenkschutzkappe 1 mit einwandigem Balgabschnitt 3 geschützt, wobei hier ebenfalls nur ein Griffbereich 27 von zweien sichtbar ist. Die Kugelgelenkschutzkappen 1, 101 werden bei dieser Ausführung als Universal-Kugelgelenkschutzkappen verwendet, die von der Montage des Kugelgelenks 50 bis unmittelbar vor dem Verbau der Lenkstange 79 in ein Nutzfahrzeug ohne zwischenzeitliches Abziehen und Wiederaufstecken auf dem Zapfenteil 53 des Kugelgelenks 50 verbleiben.

### Bezugszeichen

- 1: Kugelgelenkschutzkappe
- 3: Balgabschnitt
- 5: Zapfenabschnitt
- 7: Öffnung des Zapfenabschnitts
- 9: Boden
- 11: Wandung des Zapfenabschnitts
- 13: Kragen
- 15: Innenumfangsfläche
- 17: Rastkontur, Rippe
- 19: Rastkontur, Rippe
- 21: Wandung des Balgabschnitts
- 23: Ablauföffnung
- 25: Außenumfangsfläche
- 27: Griffbereich
- 29: Griffbereich

- 50: fertig montiertes Kugelgelenk, Radialkugelgelenk, Winkelgelenk
- 51: Dichtungsbalg
- 53: Zapfenteil
- 55: Gewindeabschnitt
- 57: Gewinderille
- 59: Gehäuse
- 61: Kugelzapfen
- 63: Gelenkkugel
- 65: zapfenseitige Gehäuseöffnung
- 67: Dichtbereich
- 69: Dichtfläche
- 71: Schaftteil
- 73: rohrförmiges Verbindungselement
- 75: Gewindespitze
- 77: Außengewinde

- 78: Gewindeflanke
- 79: Zweipunktlenker, Lenkstange
- 81: Warmprägeverbindung

- 101: Kugelgelenkschutzkappe
- 103: Balgabschnitt
- 105: Zapfenabschnitt
- 111: Wandung
- 115: Innenumfangsfläche
- 117: Rippe
- 135: Innenwandung
- 137: Zusatzwandung
- 139: Steg
- 141: Rippe
- 143: Rippe
- 145: Griffbereich

- a: Axialrichtung
- r: Radialrichtung
- u: Umfangsrichtung
- M: Mittelachse der Kugelgelenkschutzkappe
- P: Gewindesteigung
- U_{g}: Umfangsabschnitt des Griffbereichs
- rₘᵢₙ: minimaler radialer Abstand
- rₘₐₓ: maximaler radialer Abstand

## Patentansprüche

1. Kugelgelenkschutzkappe (1, 101) zum Schutz eines fertig montierten Kugelgelenks (50), die Kugelgelenkschutzkappe (1, 101) aufweisend einen Balgabschnitt (3, 103) zur Abdeckung eines Dichtungsbalgs (51) des fertig montierten Kugelgelenks (50) und einen sich an den Balgabschnitt (3, 103) anschließenden und zu dem Balgabschnitt (3, 103) hin offenen Zapfenabschnitt (5, 105) zur Abdeckung eines Zapfenteils (53) des fertig montierten Kugelgelenks (50), wobei der Zapfenabschnitt (5, 105) auf den Zapfenteil (53) aufsteckbar ist, zur vollständigen Abdichtung des Zapfenteils (53) becherförmig ausgebildet ist und einen Boden (9) und eine Wandung (11) aufweist, die sich von dem Boden (9) in einer Axialrichtung (a) der Kugelgelenkschutzkappe (1, 101) weg erstreckt, die eine in Umfangsrichtung (u) ihres Zapfenabschnitts (5, 105) verlaufende Rastkontur (17, 19, 117, 141 143) aufweist, die mit einem Gewindeabschnitt (55) des Zapfenteils (53) in Eingriff bringbar ist, **dadurch gekennzeichnet, dass** der Zapfenabschnitt (5, 105) zumindest im Bereich der Rastkontur (17, 19, 117, 141 143) im Querschnitt unrund ausgebildet ist.

2. Kugelgelenkschutzkappe (1, 101) nach Anspruch 1, **dadurch gekennzeichnet, dass** die Rastkontur (17, 19, 117, 141 143) in sich formstabil ist und einstückig mit einer Innenumfangsfläche (15, 115) der Wandung (11, 111) des Zapfenabschnitts (5, 105) ausgebildet ist.

3. Kugelgelenkschutzkappe (1, 101) nach Anspruch 1 oder 2, **dadurch gekennzeichnet, dass** die Rastkontur als ein Rippenpaar (17, 19, 117, 141 143) ausgebildet ist, dessen zwei Rippen (17, 19, 117, 141 143) sich jeweils um weniger als 180 Grad in Umfangsrichtung (u) des Zapfenabschnitts (5, 105) erstrecken und/oder von einer Innenumfangsfläche (15, 115) des Zapfenabschnitts (5, 105) weg in Richtung der Mittelachse (M) des Zapfenabschnitts (5, 105) um weniger als 1 Millimeter aufbauen.

4. Kugelgelenkschutzkappe (1, 101) nach Anspruch 3, **dadurch gekennzeichnet, dass** die zwei Rippen (17, 19, 117, 141 143) des Rippenpaares radial gegenüberliegend und/oder in Axialrichtung (a) der Kugelgelenkschutzkappe (1, 101) versetzt angeordnet sind.

5. Kugelgelenkschutzkappe (1, 101) nach Anspruch 3 oder 4, **dadurch gekennzeichnet, dass** die zwei Rippen (17, 19, 117, 141 143) in deren Mitten in Umfangsrichtung (u) des Zapfenabschnitts (5, 105) jeweils eine maximale radiale und axiale Erstreckung aufweisen und zu beiden umfänglichen Enden hin jeweils radial und axial stetig auslaufend in die Wandung (11, 111) des Zapfenabschnitts (5,105) übergehen.

6. Kugelgelenkschutzkappe (1, 101) nach einem der Ansprüche 3 bis 5, **dadurch gekennzeichnet, dass** sich die Rippen (17, 19, 117, 141 143) im Querschnitt zu der Mittelachse (M) hin verjüngen, um eine Zwangsentformung der Kugelgelenkschutzkappe (1, 101) nach einem Spritzgießen zu erleichtern und/oder während des Aufsteckens der Kugelgelenkschutzkappe (1, 101) auf den Zapfenteil (53) das Einrasten der Rippen (17, 19, 117, 141 143) in die Gewinderillen (57) des Gewindeabschnitts (55) zu verbessern.

7. Kugelgelenkschutzkappe (1, 101) nach einem der Ansprüche 3 bis 6, **dadurch gekennzeichnet, dass** der Zapfenabschnitt (5, 105) mehrere in dessen Umfangsrichtung (u) versatzfrei angeordnete und zugleich in Axialrichtung (a) der Kugelgelenkschutzkappe (1, 101) parallel zueinander beabstandete Rippenpaare (17, 19, 117, 141 143) aufweist, insbesondere entspricht der parallele Abstand jeweils einem Vielfachen der Gewindesteigung (P) eines durch den Zapfenabschnitt (5, 105) aufnehmbaren Gewindeabschnitts.

8. Kugelgelenkschutzkappe (1, 101) nach einem der vorhergehenden Ansprüche, **dadurch gekennzeichnet, dass** der Zapfenabschnitt (5, 105) zumindest im Bereich der Rastkontur (17, 19, 117, 141 143) im Querschnitt elliptisch ausgebildet ist, insbesondere bestimmen Rippen (17, 19, 117, 141 143) eines radial gegenüberliegenden Rippenpaares einen minimalen radialen Abstand (rₘᵢₙ) in Radialrichtung (r) des Zapfenabschnitts (5, 105).

9. Kugelgelenkschutzkappe (1, 101) nach einem der vorhergehenden Ansprüche, **dadurch gekennzeichnet, dass** der Zapfenabschnitt (5, 105) an dessen Außenumfangsfläche (25) zwei radial voneinander abgewandte Griffbereiche (27, 29) aufweist, bevorzugt weisen die Griffbereiche (27, 29) zur Reibungserhöhung, insbesondere beim Aufstecken und/oder Abziehen der Kugelgelenkschutzkappe (1, 101) auf den bzw. von dem Zapfenteil (53) des Kugelgelenks (50), eine Strukturierung auf, vorzugsweise ist die Strukturierung als eine Rändelung, Noppenstruktur, Aufrauhung oder in Umfangsrichtung (u) des Zapfenabschnitts (5, 105) verlaufende Riffelung ausgebildet.

10. Kugelgelenkschutzkappe (1, 101) nach Anspruch 9, **dadurch gekennzeichnet, dass** die Griffbereiche (27, 29) in radial voneinander abgewandten Umfangsabschnitten (U_{g}) des Zapfenabschnitts (5, 105) angeordnet sind, wobei die Umfangsabschnitte (U_{g}) mit den Griffbereichen (27, 29) mit einem maximalen Abstand des Zapfenabschnitts (5, 105) voneinander beabstandet sind.

11. Kugelgelenkschutzkappe (1, 101) nach Anspruch 10, **dadurch gekennzeichnet, dass** die Griffbereiche (27, 29) in Umfangsrichtung (u) des Zapfenabschnitts (5, 105) um 90 Grad versetzt zu den Rippen (17, 19, 117, 141 143) des Rippenpaares angeordnet sind, so dass in Verbindung mit dem unrunden, insbesondere elliptischen, Querschnitt des Zapfenabschnitts (5, 105) ein radiales Zusammendrücken der Griffbereiche (27, 29) in Richtung Mittelachse (M) eine Vergrößerung des radialen Abstands zwischen den sich gegenüberliegenden Rippen (17, 19, 117, 141 143) des Rippenpaares bewirkt.

12. Kugelgelenkschutzkappe (101) nach einem der vorhergehenden Ansprüche, **dadurch gekennzeichnet, dass** der Balgabschnitt (103) zum Verbessern der thermischen Isolation des Dichtungsbalgs (51) doppelwandig ausgebildet ist, insbesondere weist der Balgabschnitt (103) eine umfänglich umlaufende Innenwandung (135) und eine zu dieser zumindest im Wesentlichen konzentrisch angeordnete und zugleich in Radialrichtung (r) nach außen beabstandete Zusatzwandung (137) auf.

13. Fertig montiertes Kugelgelenk (50) mit einer aufgesteckten Kugelgelenkschutzkappe (1, 101) nach einem der Ansprüche 1 bis 12, **dadurch gekennzeichnet, dass** ein Zapfenabschnitt (5, 105) der Kugelgelenkschutzkappe (1, 101) einen Zapfenteil (53) des Kugelgelenks (1, 101) vollständig abdichtet.

14. Fertig montiertes Kugelgelenk (50) nach Anspruch 13, **dadurch gekennzeichnet, dass** zwei Rippen (17, 19, 117, 141 143) eines Rippenpaares der Kugelgelenkschutzkappe (1, 101) in deren Axialrichtung (a) um die halbe Steigung (P) eines Außengewindes (77) eines Gewindeabschnitts (55) des Zapfenteils (53) versetzt angeordnet sind.

15. Fertig montiertes Kugelgelenk (50) nach Anspruch 13 oder 14, **dadurch gekennzeichnet, dass** die Rippen (17, 19, 117, 141 143) zumindest mit einem umfänglichen Mittenbereich teilweise oder vollständig in eine jeweils zugeordnete Gewinderille (57) des Außengewindes (77) des Gewindeabschnitts (55) eintauchen, insbesondere liegt die Wandung (11, 111) des Zapfenabschnitts (5, 105) zumindest in dem umfänglichen Mittenbereich an Gewindespitzen (75) des Außengewindes (77) des Gewindeabschnitts (55) an.

16. Fertig montiertes Kugelgelenk (50) nach einem der Ansprüche 13 bis 15, **dadurch gekennzeichnet, dass** der Dichtungsbalg (51) durch die Kugelgelenkschutzkappe (1, 101) in Axialrichtung (a) gegenüber seiner Ausdehnung im entspannten Zustand zusammengedrückt ist, wodurch ein innenliegender, zwischen dem Zapfenabschnitt (5, 105) und dem Balgabschnitt (3, 103) angeordneter und zugleich in Umfangsrichtung (u) des Zapfenabschnitts (5, 105) umlaufender Dichtbereich (67) der Kugelgelenkschutzkappe (1, 101) dichtend gegen eine formkorrespondierende, ebenfalls umlaufende Dichtfläche (69) des Dichtungsbalgs (51) gedrückt ist.

17. Verwendung einer Kugelgelenkschutzkappe (1, 101) nach einem der Ansprüche 1 bis 12 und/oder eines fertig montierten Kugelgelenks (50) nach einem der Ansprüche 13 bis 16 an einem Mehrpunktlenker (79), insbesondere an einem Zweipunktlenker (79).

18. Verwendung einer Kugelgelenkschutzkappe (1, 101) nach einem der Ansprüche 1 bis 12, wobei die Kugelgelenkschutzkappe (1, 101) für Kugelgelenke (50) mit unterschiedlich ausgebildeten Zapfenteilen (53), insbesondere unterschiedlich langen Zapfenteilen (53), einsetzbar ist.

19. Verwendung einer Kugelgelenkschutzkappe (1, 101) nach einem der Ansprüche 1 bis 12, wobei die Kugelgelenkschutzkappe (1, 101) nach erfolgter Fertigmontage eines Kugelgelenks (50) bis zum Verbau des Kugelgelenks (50) in einem Fahrzeug durchgängig auf einem Zapfenteil (53) des Kugelgelenks (50) sitzt.

## Claims

1. Protective cap (1, 101) for protecting a definitively assembled ball joint (50), the protective cap (1, 101) having a bellows portion (3, 103) for covering a sealing bellows (51) of the definitively assembled ball joint (50), and having a stud portion (5, 105) for covering a stud part (53) of the definitively assembled ball joint (50), said stud portion adjoining the bellows portion (3, 103) and being open in the direction of the bellows portion (3, 103), wherein the stud portion (5, 105) can be plugged onto the stud part (53), is of cup-like design to provide for full sealing of the stud part (53) and has a base (9) and a wall (11), the latter extending away from the base (9) in an axial direction (a) of the protective cap (1, 101), which has a latching contour (17, 19, 117, 141, 143), which runs in the circumferential direction (u) of the stud portion (5, 105) of the protective cap and can be brought into engagement with a threaded portion (55) of the stud part (53), **characterized in that** the stud portion (5, 105) is of non-round design in cross section at least in the region of the latching contour (17, 19, 117, 141, 143).

2. Protective cap (1, 101) for a ball joint according to Claim 1, **characterized in that** the latching contour (17, 19, 117, 141, 143) is inherently dimensionally stable and is formed in one piece with an inner circumferential surface (15, 115) of the wall (11, 111) of the stud portion (5, 105).

3. Protective cap (1, 101) for a ball joint according to Claim 1 or 2, **characterized in that** the latching contour is defined in the form of a rib pair (17, 19, 117, 141, 143), of which the two ribs (17, 19, 117, 141, 143) extend in each case by less than 180 degrees in the circumferential direction (u) of the stud portion (5, 105) and/or protrudes from an inner circumferential surface (15, 115) of the stud portion (5, 105) in the direction of the centre axis (M) of the stud portion (5, 105) by less than 1 millimetre.

4. Protective cap (1, 101) for a ball joint according to Claim 3, **characterized in that** the two ribs (17, 19, 117, 141, 143) of the rib pair are located radially opposite one another and/or are offset in the axial direction (a) of the protective cap (1, 101) .

5. Protective cap (1, 101) for a ball joint according to Claim 3 or 4, **characterized in that** the two ribs (17, 19, 117, 141, 143) each have a maximum radial and axial extent in their centres, as seen in the circumferential direction (u) of the stud portion (5, 105), and peter out continuously in the radial and axial directions in each case towards both circumferential ends as they merge into the wall (11, 111) of the stud portion (5, 105).

6. Protective cap (1, 101) for a ball joint according to one of Claims 3 to 5, **characterized in that** the ribs (17, 19, 117, 141, 143) taper cross sectionally in the direction of the centre axis (M) so as to facilitate forced demoulding of the protective cap (1, 101) following injection moulding and/or, as the protective cap (1, 101) is being plugged onto the stud part (53), so as to improve the latching of the ribs (17, 19, 117, 141, 143) into the thread grooves (57) of the threaded portion (55).

7. Protective cap (1, 101) for a ball joint according to one of Claims 3 to 6, **characterized in that** the stud portion (5, 115) has a plurality of rib pairs (17, 19, 117, 141, 143), which are arranged in an offset-free manner in the circumferential direction (u) of the stud portion and, at the same time, are spaced apart parallel to one another in the axial direction (a) of the protective cap (1, 101), in particular the parallel distance corresponds in each case to a multiple of the thread pitch (P) of a threaded portion which can be accommodated by the stud portion (5, 105).

8. Protective cap (1, 101) for a ball joint according to one of the preceding claims, **characterized in that** the stud portion (5, 105) is of elliptical design in cross section at least in the region of the latching contour (17, 19, 117, 141, 143), in particular ribs (17, 19, 117, 141, 143) of a radially opposite rib pair determine a minimum radial distance (rₘᵢₙ) in the radial direction (r) of the stud portion (5, 105).

9. Protective cap (1, 101) for a ball joint according to one of the preceding claims, **characterized in that**, on its outer circumferential surface (25), the stud portion (5, 105) has two grip regions (27, 29) which are directed away from one another in the radial direction, and preferably, for the purpose of increasing friction, in particular from the protective cap (1, 101) being plugged into the stud part (53) of the ball joint (50) and/or drawn off of the same, the grip regions (27, 29) have a structured formation, and the structured formation is preferably designed in the form of knurling, of a structure comprising protuberances, of roughening or of fluting running in the circumference direction (u) of the stud portion (5, 105).

10. Protective cap (1, 101) for a ball joint according to Claim 9, **characterized in that** the grip regions (27, 29) are arranged in circumferential portions (U_{g}) of the stud portion (5, 105) which are directed away from one another in the radial direction, wherein the circumferential portions (U_{g}) having the grip regions (27, 29) are spaced apart from one another by a maximum distance of the stud portion (5, 105) .

11. Protective cap (1, 101) for a ball joint according to Claim 10, **characterized in that** the grip regions (27, 29) are offset in relation to the ribs (17, 19, 117, 141, 143) of the rib pair by 90 degrees in the circumferential direction (u) of the stud portion (5, 105), and therefore in conjunction with the non-round, in particular elliptical, cross section of the stud portion (5, 105), radial compression of the grip regions (27, 29) in the direction of the centre axis (M) gives rise to an increase in the radial distance between the opposite ribs (17, 19, 117, 141, 143) of the rib pair.

12. Protective cap (101) for a ball joint according to one of the preceding claims, **characterized in that**, for the purpose of improving the thermal insulation of the sealing bellows (51), the bellows portion (103) is of double-walled design, in particular the bellows portion (103) has a circumferentially encircling inner wall (135) and an additional wall (137), which is arranged at least essentially concentrically in relation to said inner wall and, at the same time, is spaced apart outwards in the radial direction (r).

13. Definitively assembled ball joint (50) with a plugged-on protective cap (1, 101) according to one of Claims 1 to 12, **characterized in that** a stud portion (5, 105) of the protective cap (1, 101) fully seals a stud part (53) of the ball joint (1, 101) .

14. Definitively assembled ball joint (50) according to Claim 13, **characterized in that** two ribs (17, 19, 117, 141, 143) of a rib pair of the protective cap (1, 101) for the ball joint are offset in the axial direction (a) of the protective cap by half the pitch (P) of an external thread (77) of a threaded portion (55) of the stud part (53).

15. Definitively assembled ball joint (50) according to Claim 13 or 14, **characterized in that** the ribs (17, 19, 117, 141, 143) penetrate partially or fully, at least by way of a circumferential centre region, into a respectively associated thread groove (57) of the external thread (77) of the threaded portion (55), in particular the wall (11, 111) of the stud portion (5, 105), at least in the circumferential centre region, butts against threaded tips (75) of the external thread (77) of the threaded portion (55) .

16. Definitively assembled ball joint (50) according to one of Claims 13 to 15, **characterized in that** the protective cap (1, 101) for the ball joint compresses the sealing bellows (51) in the axial direction (a) in relation to how it extends when it is relieved of stressing, as a result which an inner sealing region (67) of the protective cap (1, 101), said sealing region being arranged between the stud portion (5, 105) and the bellows portion (3, 103) and, at the same time, then circling in the circumferential direction (u) of the stud portion (5, 105), is pushed with sealing action against a correspondingly shaped, likewise encircling sealing surface (69) of the sealing bellows (51).

17. Use of a protective cap (1, 101) for a ball joint according to one of Claims 1 to 12 and/or of a definitively assembled ball joint (50) according to one of Claims 13 to 16 on a multi-point suspension link (79), in particular on a two-point suspension link (79).

18. Use of a protective cap (1, 101) for a ball joint according to one of Claims 1 to 12, wherein the protective cap (1, 101) can be used for ball joints (50) with stud parts (53) of different designs, in particular with stud parts (53) of different lengths.

19. Use of a protective cap (1, 101) for a ball joint according to one of Claims 1 to 12, wherein, once a ball joint (50) has been definitively assembled and until the ball joint (50) is installed in a vehicle, the protective cap (1, 101) is seated throughout on a stud part (53) of the ball joint (50).

## Revendications

1. Capuchon de protection de joint à rotule (1, 101) permettant de protéger un joint à rotule complètement monté (50), le capuchon de protection de joint à rotule (1, 101) présentant une partie de soufflet (3, 103) pour recouvrir un soufflet d'étanchéité (51) du joint à rotule complètement monté (50) et une partie de tourillon (5, 105) raccordée à la partie de soufflet (3, 103) et ouverte vers la partie de soufflet (3, 103), destinée à recouvrir un élément formant tourillon (53) du joint à rotule complètement monté (50), dans lequel la partie de tourillon (5, 105) peut être emboîtée sur l'élément formant tourillon (53), est réalisée en forme de godet afin de rendre l'élément formant tourillon (53) complètement étanche, et présente un fond (9) et une paroi (11) qui s'éloigne du fond (9) dans une direction axiale (a) du capuchon de protection de joint à rotule (1, 101), qui présente un contour d'arrêt (17, 19, 117, 141, 143) s'étendant dans la direction circonférentielle (u) de sa partie de tourillon (5, 105), et qui peut être mis en prise avec une partie filetée (55) de l'élément formant tourillon (53), **caractérisé en ce que** la partie de tourillon (5, 105) est réalisée de manière ovale en section transversale, au moins au niveau du contour d'arrêt (17, 19, 117, 141, 143) .

2. Capuchon de protection de joint à rotule (1, 101) selon la revendication 1, **caractérisé en ce que** le contour d'arrêt (17, 19, 117, 141, 143) est en soi indéformable et réalisé d'un seul tenant avec une surface circonférentielle intérieure (15, 115) de la paroi (11, 111) de la partie de tourillon (5, 105).

3. Capuchon de protection de joint à rotule (1, 101) selon la revendication 1 ou 2, **caractérisé en ce que** le contour d'arrêt est réalisé sous la forme d'une paire de nervures (17, 19, 117, 141, 143) dont les deux nervures (17, 19, 117, 141, 143) s'étendent respectivement sur moins de 180 degrés dans la direction circonférentielle (u) de la partie de tourillon (5, 105), et/ou s'élèvent de moins de 1 millimètre à partir d'une surface circonférentielle intérieure (15, 115) de la partie de tourillon (5, 105) en direction de l'axe médian (M) de la partie de tourillon (5, 105).

4. Capuchon de protection de joint à rotule (1, 101) selon la revendication 3, **caractérisé en ce que** les deux nervures (17, 19, 117, 141, 143) de la paire de nervures sont disposées radialement à l'opposé et/ou de manière décalée dans la direction axiale (a) du capuchon de protection de joint à rotule (1, 101).

5. Capuchon de protection de joint à rotule (1, 101) selon la revendication 3 ou 4, **caractérisé en ce que** les deux nervures (17, 19, 117, 141, 143) présentent en leurs centres dans la direction circonférentielle (u) de la partie de tourillon (5, 105) respectivement une étendue radiale et axiale maximale, et se prolongent en direction des deux extrémités circonférentielles, respectivement en se terminant de manière régulièrement radiale et axiale, par la paroi (11, 111) de la partie de tourillon (5, 105).

6. Capuchon de protection de joint à rotule (1, 101) selon l'une des revendications 3 à 5, **caractérisé en ce que** les nervures (17, 19, 117, 141, 143) rétrécissent en section transversale vers l'axe médian (M) afin de faciliter un démoulage forcé du capuchon de protection de joint à rotule (1, 101) après un moulage par injection, et/ou pour améliorer pendant l'emboîtement du capuchon de protection de joint à rotule (1, 101) sur l'élément formant tourillon (53) l'enclenchement des nervures (17, 19, 117, 141, 143) dans les gorges de filet (57) de la partie filetée (55).

7. Capuchon de protection de joint à rotule (1, 101) selon l'une des revendications 3 à 6, **caractérisé en ce que** la partie de tourillon (5, 105) présente plusieurs paires de nervures (17, 19, 117, 141, 143) disposées sans décalage dans la direction circonférentielle (u) de celle-ci et en même temps espacées parallèlement les unes aux autres dans la direction axiale (a) du capuchon de protection de joint à rotule (1, 101), l'espacement parallèle correspondant en particulier respectivement à un multiple du pas de filetage (P) d'une partie filetée pouvant être reçue par la partie de tourillon (5, 105).

8. Capuchon de protection de joint à rotule (1, 101) selon l'une quelconque des revendications précédentes, **caractérisé en ce que** la partie de tourillon (5, 105) est réalisée de manière elliptique en section transversale, au moins au niveau du contour d'arrêt (17, 19, 117, 141, 143), en particulier les nervures (17, 19, 117, 141, 143) d'une paire de nervures radialement opposées déterminant un espacement radial minimal (rₘᵢₙ) dans la direction radiale (r) de la partie de tourillon (5, 105).

9. Capuchon de protection de joint à rotule (1, 101) selon l'une quelconque des revendications précédentes, **caractérisé en ce que** la partie de tourillon (5, 105) présente sur sa surface circonférentielle extérieure (25) deux zones de préhension (27, 29) radialement détournées l'une de l'autre, les zones de préhension (27, 29) présentant de préférence une structuration destinée à augmenter la friction, en particulier lors de l'emboîtement et/ou du retrait du capuchon de protection de joint à rotule (1, 101) sur ou de l'élément formant tourillon (53) du joint à rotule (50), la structuration étant de préférence réalisée sous forme de moletage, de structure à nopes, de rugosité ou de cannelure s'étendant dans la direction circonférentielle (u) de la partie de tourillon (5, 105) .

10. Capuchon de protection de joint à rotule (1, 101) selon la revendication 9, **caractérisé en ce que** les zones de préhension (27, 29) sont disposées dans des parties circonférentielles (U_{g}), radialement détournées l'une de l'autre, de la partie de tourillon (5, 105), les parties circonférentielles (U_{g}) avec les zones de préhension (27, 29) étant espacées l'une de l'autre par un espacement maximal de la partie de tourillon (5, 105) .

11. Capuchon de protection de joint à rotule (1, 101) selon la revendication 10, **caractérisé en ce que** les zones de préhension (27, 29) sont disposées de manière décalée de 90 degrés par rapport aux nervures (17, 19, 117, 141, 143) de la paire de nervures dans la direction circonférentielle (u) de la partie de tourillon (5, 105) de sorte que conjointement avec la section transversale ovale, en particulier elliptique, de la partie de tourillon (5, 105), une compression radiale des zones de préhension (27, 29) en direction de l'axe médian (M) provoque une augmentation de l'espacement radial entre les nervures (17, 19, 117, 141, 143) opposées de la paire de nervures.

12. Capuchon de protection de joint à rotule (101) selon l'une quelconque des revendications précédentes, **caractérisé en ce que** la partie de soufflet (103) est réalisée à double paroi pour améliorer l'isolation thermique du soufflet d'étanchéité (51), la partie de soufflet (103) présentant en particulier une paroi intérieure (135) sur le pourtour circonférentiel et une paroi supplémentaire (137) disposée de manière au moins substantiellement concentrique par rapport à celle-ci et étant en même temps espacée vers l'extérieur dans la direction radiale (r).

13. Joint à rotule complètement monté (50) comprenant un capuchon de protection de joint à rotule (1, 101) emboîté selon l'une des revendications 1 à 12, **caractérisé en ce qu'**une partie de tourillon (5, 105) du capuchon de protection de joint à rotule (1, 101) rend complètement étanche un élément formant tourillon (53) du joint à rotule (1, 101).

14. Joint à rotule complètement monté (50) selon la revendication 13, **caractérisé en ce que** deux nervures (17, 19, 117, 141, 143) d'une paire de nervures du capuchon de protection de joint à rotule (1, 101) sont disposées dans leur direction axiale (a) de manière décalée d'un demi pas (P) d'un filet extérieur (77) d'une partie filetée (55) de l'élément formant tourillon (53).

15. Joint à rotule complètement monté (50) selon la revendication 13 ou 14, **caractérisé en ce que** les nervures (17, 19, 117, 141, 143) pénètrent au moins par une zone centrale circonférentielle partiellement ou complètement dans une gorge de filet (57) respectivement associée du filet extérieur (77) de la partie filetée (55), la paroi (11, 111) de la partie de tourillon (5, 105) étant en particulier appliquée au moins dans la zone centrale circonférentielle contre les sommets de filet (75) du filet extérieur (77) de la partie filetée (55).

16. Joint à rotule complètement monté (50) selon l'une des revendications 13 à 15, **caractérisé en ce que** le soufflet d'étanchéité (51) est comprimé par le capuchon de protection de joint à rotule (1, 101) dans la direction axiale (a) par rapport à son extension à l'état détendu, de sorte qu'une zone d'étanchéité (67) du capuchon de protection de joint à rotule (1, 101), disposée à l'intérieur, entre la partie de tourillon (5, 105) et la partie de soufflet (3, 103) et en même temps périphérique dans la direction circonférentielle (u) de la partie de tourillon (5, 105), est plaquée de manière étanche contre une surface d'étanchéité (69), de forme correspondante et également périphérique, du soufflet d'étanchéité (51).

17. Utilisation d'un capuchon de protection de joint à rotule (1, 101) selon l'une des revendications 1 à 12 et/ou d'un joint à rotule complètement monté (50) selon l'une des revendications 13 à 16 sur un bras de suspension multipoint (79), en particulier sur un bras de suspension à deux points (79).

18. Utilisation d'un capuchon de protection de joint à rotule (1, 101) selon l'une des revendications 1 à 12, dans laquelle le capuchon de protection de joint à rotule (1, 101) peut être utilisé pour des joints à rotule (50) ayant des éléments de tourillon (53) réalisés différemment, en particulier des éléments de tourillon (53) de longueur différente.

19. Utilisation d'un capuchon de protection de joint à rotule (1, 101) selon l'une des revendications 1 à 12, dans laquelle le capuchon de protection de joint à rotule (1, 101), une fois le montage final d'un joint à rotule (50) achevé, est situé constamment sur un élément formant tourillon (53) du joint à rotule (50) jusqu'à l'installation du joint à rotule (50) dans un véhicule.
